(19)

Europäisches
Patentamt

European
Patent Office

Office européen
des brevets

(11) **EP 4 250 189 A1**

(12) **EUROPEAN PATENT APPLICATION**
published in accordance with Art. 153(4) EPC

(43) Date of publication:
**27.09.2023 Bulletin 2023/39**

(21) Application number: **21899965.4**

(22) Date of filing: **29.11.2021**

(51) International Patent Classification (IPC):
**G06N 20/00** (2019.01)    **G06N 3/04** (2023.01)
**G06N 3/08** (2023.01)    **G06N 5/04** (2023.01)

(86) International application number:
**PCT/CN2021/133944**

(87) International publication number:
**WO 2022/116933** (09.06.2022 Gazette 2022/23)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.12.2020 CN 202011401668**

(71) Applicant: **Huawei Technologies Co., Ltd.
Shenzhen, Guangdong 518129 (CN)**

(72) Inventors:
• **ZHAN, De-Chuan
Nanjing, Jiangsu 210023 (CN)**
• **LI, Xinchun
Nanjing, Jiangsu 210023 (CN)**
• **SONG, Shaoming
Shenzhen, Guangdong 518129 (CN)**
• **SHAO, Yunfeng
Shenzhen, Guangdong 518129 (CN)**
• **LI, Bingshuai
Shenzhen, Guangdong 518129 (CN)**
• **QIAN, Li
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **MODEL TRAINING METHOD, DATA PROCESSING METHOD AND APPARATUS**

(57) This application discloses a model training method, and relates to the field of artificial intelligence. The method provided in this application is applicable to a machine learning system. The machine learning system includes a server and at least two client side devices. The method includes: A first client side device receives a first shared model sent by the server; outputs a first prediction result for a data set through the first shared model; obtains a first loss value based on the first prediction result; outputs a second prediction result for the data set through a first private model of the first client side device; obtains a second loss value based on the second prediction result; and performs second combination processing on the first loss value and the second loss value to obtain a third loss value, where the third loss value is used to update the first private model. According to the method provided in this application, performance of a model trained by a client side device in a federated learning system can be improved.

FIG. 8

## Description

This application claims priority to Chinese Patent Application No. 202011401668.9, filed with the China National Intellectual Property Administration on December 4, 2020 and entitled "MODEL TRAINING METHOD, DATA PROCESSING METHOD, AND APPARATUS", which is incorporated herein by reference in its entirety.

## TECHNICAL FIELD

This application relates to the field of artificial intelligence technologies, and specifically, to a model training method, a data processing method, and an apparatus.

## BACKGROUND

Artificial intelligence (artificial intelligence, AI) is a theory, a method, a technology, and an application system that are used to simulate, extend, and expand human intelligence by using a digital computer or a machine controlled by a digital computer, to perceive an environment, obtain knowledge, and obtain an optimal result based on the knowledge. In other words, artificial intelligence is a branch of computer science and attempts to understand essence of intelligence and produce a new intelligent machine that can react in a similar manner to human intelligence. Artificial intelligence is to research design principles and implementation methods of various intelligent machines, so that the machines have perception, inference, and decision-making functions. Research in the field of artificial intelligence includes robotics, natural language processing, computer vision, decision-making and inference, humanmachine interaction, recommendation and search, AI basic theories, and the like.

With development of artificial intelligence, federated learning gradually becomes a development trend. Federated learning is a machine learning system that can effectively help a plurality of client side devices jointly train models when a data privacy protection requirement is met. During federated learning, how to improve performance of a model obtained through training by a client side device becomes an urgent technical problem to be resolved.

## SUMMARY

Embodiments of this application provide a model training method, a data processing method, and an apparatus, to improve performance of a model obtained through training by a client side device in federated learning.

To achieve the foregoing objective, embodiments of this application provide the following technical solutions.

A first aspect of this application provides a model training method. The method is applicable to a machine learning system. The machine learning system may include a server and at least two client side devices. The machine learning system may be a federated learning system. A first client side device is any one of the at least two client side devices, and the method may include: receiving a first shared model sent by the server. Receiving the first shared model sent by the server may be understood as receiving all or a part of parameters of the first shared model sent by the server. A first prediction result is output for a data set through the first shared model. In this application, the data set is sometimes referred to as a training data set, and the data set and the training data set have a same meaning, and are used to represent a data set locally stored in a client side device. A first loss value is obtained based on the first prediction result. For example, the data set may be input into the first shared model, to output the first prediction result of the data set. An example in which a second shared model is used to execute a classification task is used for description. The first client side device may obtain a sample data set, where the sample data set includes a plurality of samples, and each of the plurality of samples includes a first label. The data set may be classified through the second shared model to obtain a second label of each sample in the test data set, and the first prediction result may be understood as the second label. The first loss value is used to indicate a difference between the first label and the second label. A second prediction result is output for the data set through a first private model of the first client side device. A second loss value is obtained based on the second prediction result. Second combination processing is performed on the first loss value and the second loss value to obtain a third loss value, where the third loss value is used to update the private model. It can be learned from the first aspect that in the solution provided in this application, two models are trained on the client side device, one model participates in a federated learning and aggregation process, and the other model does not directly participate in the federated learning and aggregation process. Loss values of the two models are separately obtained based on the two trained models, the loss values of the two models are fused, and the private model is updated based on a fused loss value. Data distribution of each client side device in the machine learning system is usually non-independent and identically (non-independent and identically, Non-IID), and there is a large difference between data distribution. Different data distribution may be understood as different proportions of a same label in data sets of different clients. Therefore, if only the second loss value is used to update the first private model, prediction performance of the trained first private model for global data is not satisfactory. The global data may be understood as a set of local data of the first client side device and data of the at least two client side devices. In the solution provided in this application, because the server fuses shared models sent by a plurality of client side devices, and sends the fused shared model to each client side model, a loss value (the first loss value) determined based on a prediction result output by the shared model has higher reliability. The loss value with the higher reliability and a loss value (the second loss value) of the private model are used for combination processing, and the private model is updated based on a loss value (the third loss value) obtained through combination processing, to guide a training process of the private model, so that the private model has good prediction results for both local data and global data. In other words, in the solution provided in this application, information transmission between two models is implemented, so that performance of the private model obtained through training by the client side device is better.

Optionally, with reference to the first aspect, in a first possible implementation, the third loss value is further used to update the first shared model to obtain the second shared model, and the method further includes: sending the second shared model to the server, where the second shared model is used by the server to update the first shared model. It can be learned from the first possible implementation of the first aspect that, the loss values of the two models are separately obtained based on the two trained models, the loss values of the two models are fused, and the shared model is updated based on the fused loss value, to implement information transmission between the two models, so that performance of the shared model obtained through training by the client side device is better.

Optionally, with reference to the first aspect or the first possible implementation of the first aspect, in a second possible implementation, the first loss value may include one or more of a cross-entropy loss value and a mutual distillation loss value, and the second loss value may include one or more of a cross-entropy loss value and a mutual distillation loss value. It can be learned from the second possible implementation of the first aspect that several typical first loss values and second loss values are provided, to increase diversity of the solution. It should be noted that, in this application, the obtained first loss value includes but is not limited to the cross-entropy loss value and the mutual distillation loss value, and the second loss value includes but is not limited to the cross-entropy loss value and the mutual distillation loss value.

Optionally, with reference to the first aspect or the first and the second possible implementations of the first aspect, in a third possible implementation, the training data set includes a first training data set requiring privacy protection and a second training data set not requiring privacy protection; the outputting a first prediction result for a training data set through the first shared model includes: outputting the first prediction result for the second training data set through the first shared model; and the outputting a second prediction result for the training data set through a first private model of the first client side device includes: outputting the second prediction result for the first training data set and the second training data set through the first private model of the first client side device. It can be learned from the third possible implementation of the first aspect that, in some possible application scenarios, the client side device may have a very high requirement for data privacy protection. In this case, training data of the client side device may be classified based on a requirement for privacy protection. Data having a high privacy protection requirement participates only in a training process of the private model, and remaining data may participate in both a training process of the shared model and the training process of the private model.

Optionally, with reference to the first aspect or the first to the third possible implementations of the first aspect, in a fourth possible implementation, the performing second combination processing on the first loss value and the second loss value to obtain a third loss value may include: performing weighting processing on the first loss value and the second loss value to obtain the third loss value. It can be learned from a fifth possible implementation of the first aspect that a specific manner of performing combination processing on the first loss value and the second loss value is provided, to increase diversity of the solution.

Optionally, with reference to the fifth possible implementation of the first aspect, in the fifth possible implementation, the performing weighting processing on the first loss value and the second loss value to obtain the third loss value may include: performing averaging processing on the first loss value and the second loss value to obtain the third loss value. It can be learned from a sixth possible implementation of the first aspect that a specific manner of performing combination processing on the first loss value and the second loss value is provided, to increase diversity of the solution.

Optionally, with reference to the first aspect or the first to the fifth possible implementations of the first aspect, in the sixth possible implementation, the first shared model and the first private model share a feature extraction model. In a possible implementation, before receiving the first shared model, the first terminal device stores a second private model, and the method further includes: updating a feature extraction model of the second private model based on the feature extraction model of the first shared model, to obtain the first private model, where the first private model is further used to replace the second private model. In another possible implementation, the first private model directly uses the feature extraction model of the first shared model. It can be learned from the sixth possible implementation of the first aspect that the shared model and the private model that are trained by the client side device may use a same feature extraction model, the shared model and the private model that are trained by the client side device may use a same task model or different task models, and the shared model and the private model use the same feature extraction model, which facilitates a subsequent aggregation processing process.

Optionally, with reference to the first aspect or the first to the sixth possible implementations of the first aspect, in a seventh possible implementation, a third shared model is sent to the server, where that the first client side device sends the third shared model to the server may be understood as that the first client side device sends all weight parameters of the third shared model to the server. Alternatively, that the first client side device sends the third shared model to the server may be understood as that the first client side device sends a part of weight parameters of the third shared model to the server. For example, if the third shared model is obtained by the first client side device by training an initial shared model to some extent, the part of weight parameters are a weight parameter that is different in the third shared model and the initial shared model. Therefore, the server performs first aggregation processing on the third shared models sent by the at least two client sides, to obtain the third shared model. The server may perform aggregation processing on a plurality of received third shared models according to a plurality of aggregation algorithms, to obtain the third shared model. For example, the plurality of third shared models may be averaged to obtain the third shared model, or weighting processing may be performed on the plurality of third shared models to obtain the first shared model, or another preset algorithm may be used to process the plurality of first shared models to obtain the first shared model.

A second aspect of this application provides a data processing method. The method is applicable to a machine learning system. The machine learning system may include a server and at least two client side devices. A first client side device is any one of the at least two client side devices. The method may include: obtaining to-be-processed data; and processing the to-be-processed data based on a target model stored in the client side device, to obtain a prediction result, where the target model is obtained by updating a first private model based on a third loss value, the third loss value is obtained by performing combination processing on a first loss value and a second loss value, the first loss value is obtained based on a first prediction result, the first prediction result is a prediction result that is output by a first shared model for a training data set, the first shared model is obtained from the server, the second loss value is obtained based on a second prediction result, and the second prediction result is a prediction result that is output by the first private model for the training data set. It can be learned from the second aspect that, in the solution provided in this application, the target model is a model obtained through training based on a local training data set and knowledge learned based on a shared model. Compared with a model obtained through training by a client side device in a conventional technology, the target model in this application has better performance.

Optionally, with reference to the second aspect, in a first possible implementation, the third loss value is further used to update the first shared model to obtain a second shared model, and the second shared model is sent to the server, so that the server updates the first shared model. It can be learned from the first possible implementation of the second aspect that, loss values of two models are separately obtained based on the two trained models, the loss values of the two models are fused, and a shared model is updated based on a fused loss value, to implement information transmission between the two models, so that performance of the shared model obtained through training by the client side device is better.

Optionally, with reference to the second aspect or the first possible implementation of the second aspect, in a second possible implementation, the first loss value includes one or more of a cross-entropy loss value and a mutual distillation loss value, and the second loss value includes one or more of a cross-entropy loss value and a mutual distillation loss value. It can be learned from the second possible implementation of the second aspect that several typical first loss values and second loss values are provided, to increase diversity of the solution.

Optionally, with reference to the second aspect or the first and the second possible implementations of the second aspect, in a third possible implementation, the training data set includes a first training data set and a second training data set, the first training data set is preset to require privacy protection, the second training data set is preset to not require privacy protection, the first prediction result is a prediction result that is output by the first shared model for the second training data set, and the second prediction result is a prediction result that is output by the first private model for the first training data set and the second training data set. It can be learned from the third possible implementation of the second aspect that, in some possible application scenarios, the client side device may have a very high requirement for data privacy protection. In this case, training data of the client side device may be classified based on a requirement for privacy protection. Data having a high privacy protection requirement participates only in a training process of the private model, and remaining data may participate in both a training process of the shared model and the training process of the private model.

Optionally, with reference to the second aspect or the first to the third possible implementations of the second aspect, in a fourth possible implementation, the third loss value is obtained by performing weighting processing on the first loss value and the second loss value. It can be learned from the fourth possible implementation of the second aspect that a specific manner of performing combination processing on the first loss value and the second loss value is provided, to increase diversity of the solution.

Optionally, with reference to the fifth possible implementation of the second aspect, in a fifth possible implementation, the third loss value is specifically obtained by performing averaging processing on the first loss value and the second loss value. It can be learned from the fifth possible implementation of the second aspect that a specific manner of performing combination processing on the first loss value and the second loss value is provided, to increase diversity of the solution.

Optionally, with reference to the second aspect or the first to the fifth possible implementations of the second aspect, in a sixth possible implementation, before receiving the first shared model, the first terminal device stores a second private model, the first private model is obtained by updating a feature extraction model of the second private model based on a feature extraction model of the first shared model, and the first private model is further used to replace the second private model.

Optionally, with reference to the second aspect, in a seventh possible implementation, when the to-be-processed data is data requiring privacy protection, the to-be-processed data is processed through the target model stored in the client side device, to obtain a prediction result. When the to-be-processed data is data not requiring privacy protection, the to-be-processed data may be processed through the target model stored in the client side device, or the to-be-processed data may be processed through the second shared model. The second shared model is a model obtained by updating the first shared model based on the third loss value.

A third aspect of this application provides a client side device. The client side device is applicable to a machine learning system, the machine learning system may include a server and at least two client side devices, and a first client side device is any one of the at least two client side devices, and may include a transceiver module and a training module. The transceiver module is further configured to receive a first shared model sent by the server. The training module is configured to: output a first prediction result for a training data set through the first shared model; obtain a first loss value based on the first prediction result; output a second prediction result for the training data set through a first private model of the first client side device; obtain a second loss value based on the second prediction result; and perform second combination processing on the first loss value and the second loss value to obtain a third loss value, where the third loss value is used to update the first private model.

Optionally, with reference to the third aspect, in a first possible implementation, the third loss value is further used to update the first shared model to obtain a second shared model, and the transceiver module is further configured to send the second shared model to the server, where the second shared model is used by the server to update the first shared model.

Optionally, with reference to the third aspect or the first possible implementation of the third aspect, in a second possible implementation, the first loss value includes one or more of a cross-entropy loss value and a mutual distillation loss value, and the second loss value includes one or more of a cross-entropy loss value and a mutual distillation loss value.

Optionally, with reference to the third aspect or the first and the second possible implementations of the third aspect, in a third possible implementation, the training data set includes a first training data set and a second training data set, requiring privacy protection is preset in the first training data set, not requiring privacy protection is preset in the second training data set.

The training module is specifically configured to output the first prediction result for the second training data set through the first shared model.

The training module is specifically configured to output the second prediction result for the first training data set and the second training data set through the first private model of the first client side device.

Optionally, with reference to the third aspect or the first to the third possible implementations of the third aspect, in a fourth possible implementation, the training module is specifically configured to perform weighting processing on the first loss value and the second loss value to obtain the third loss value.

Optionally, with reference to the fifth possible implementation of the third aspect, in a fifth possible implementation, the training module is specifically configured to perform averaging processing on the first loss value and the second loss value to obtain the third loss value.

Optionally, with reference to the third aspect or the first to the fifth possible implementations of the third aspect, in a sixth possible implementation, before receiving the first shared model, the first terminal device stores a second private model, and the training module is further configured to update a feature extraction model of the second private model based on a feature extraction model of the first shared model, to obtain the first private model, where the first private model is further used to replace the second private model.

Optionally, with reference to the third aspect or the first to the sixth possible implementations of the third aspect, in a seventh possible implementation, the first client side is further configured to send the second shared model to the server, so that the server performs first aggregation processing on the second shared models sent by the at least two client sides, to obtain the first shared model.

For beneficial effects of the third aspect and the implementations of the third aspect, refer to the beneficial effects of the first aspect and the implementations of the first aspect for understanding. Details are not described herein again.

A fourth aspect of this application provides a client side device. The client side device is applicable to a machine learning system. The machine learning system may include a server and at least two client side devices. A first client side device is any one of the at least two client side devices, and may include an obtaining module, configured to obtain to-be-processed data; and an inference module, configured to process the to-be-processed data based on a target model stored in the client side device, to obtain a prediction result, where the target model is obtained by updating a first private model based on a third loss value, the third loss value is obtained by performing combination processing on a first loss value and a second loss value, the first loss value is obtained based on a first prediction result, the first prediction result is a prediction result that is output by a first shared model for a training data set, the first shared model is obtained from the server, the second loss value is obtained based on a second prediction result, and the second prediction result is a prediction result that is output by the first private model for the training data set.

Optionally, with reference to the fourth aspect, in a first possible implementation, the third loss value is further used to update the first shared model to obtain a second shared model, and the second shared model is sent to the server, so that the server updates the first shared model.

Optionally, with reference to the fourth aspect or the first possible implementation of the fourth aspect, in a second possible implementation, the first loss value includes one or more of a cross-entropy loss value and a mutual distillation loss value, and the second loss value includes one or more of a cross-entropy loss value and a mutual distillation loss value.

Optionally, with reference to the fourth aspect or the first and the second possible implementations of the fourth aspect, in a third possible implementation, the training data set includes a first training data set requiring privacy protection and a second training data set not requiring privacy protection, the first prediction result is a prediction result that is output by the first shared model for the second training data set, and the second prediction result is a prediction result that is output by the first private model for the first training data set and the second training data set.

Optionally, with reference to the fourth aspect or the first to the third possible implementations of the fourth aspect, in a fourth possible implementation, the third loss value is obtained by performing weighting processing on the first loss value and the second loss value.

Optionally, with reference to the fifth possible implementation of the fourth aspect, in a fifth possible implementation, the third loss value is specifically obtained by performing averaging processing on the first loss value and the second loss value.

Optionally, with reference to the fourth aspect or the first to the fifth possible implementations of the fourth aspect, in a sixth possible implementation, before receiving the first shared model, the first terminal device stores a second private model, the first private model is obtained by updating a feature extraction model of the second private model based on a feature extraction model of the first shared model, and the first private model is further used to replace the second private model.

For beneficial effects of the fourth aspect and the implementations of the fourth aspect, refer to the beneficial effects of the second aspect and the implementations of the second aspect for understanding. Details are not described herein again.

A fifth aspect of this application provides a machine learning system. The machine learning system may include a server and at least two client side devices, a first client side device is any one of the at least two client side devices. The server is configured to send a first shared model to the first client side device. The first client side device is configured to: output a first prediction result for a training data set through the first shared model; obtain a first loss value based on the first prediction result; output a second prediction result for the training data set through a first private model of the first client side device; obtain a second loss value based on the second prediction result; and perform second combination processing on the first loss value and the second loss value to obtain a third loss value, where the third loss value is used to update the private model.

Optionally, with reference to the fifth aspect, in a first possible implementation, the third loss value is further used to update the first shared model to obtain a second shared model. The first client side device is further configured to send the second shared model to the server. The server is further configured to update the first shared model based on the second shared model.

Optionally, with reference to the fifth aspect or the first possible implementation of the fifth aspect, in a second possible implementation, the first loss value may include one or more of a cross-entropy loss value and a mutual distillation loss value, and the second loss value may include one or more of a cross-entropy loss value and a mutual distillation loss value.

Optionally, with reference to the fifth aspect or the first and the second possible implementations of the fifth aspect, in a third possible implementation, the training data set includes a first training data set requiring privacy protection and a second training data set not requiring privacy protection. The first terminal device is specifically configured to output the first prediction result for the second training data set through the first shared model. The first terminal device is specifically configured to output the second prediction result for the first training data set and the second training data set through the first private model of the first client side device.

Optionally, with reference to the fifth aspect or the first to the third possible implementations of the fifth aspect, in a fourth possible implementation, the first terminal device is specifically configured to perform weighting processing on the first loss value and the second loss value to obtain the third loss value.

Optionally, with reference to the fifth possible implementation of the fifth aspect, in a fifth possible implementation, the first terminal device is specifically configured to perform averaging processing on the first loss value and the second loss value to obtain the third loss value.

Optionally, with reference to the fifth aspect or the first to the fifth possible implementations of the fifth aspect, in a sixth possible implementation, before receiving the first shared model, the first terminal device stores a second private model, and the first terminal device is further configured to update a feature extraction model of the second private model based on a feature extraction model of the first shared model, to obtain the first private model, where the first private model is further used to replace the second private model.

Optionally, with reference to the fifth aspect or the first to the sixth possible implementations of the fifth aspect, in a seventh possible implementation, the first client side device is further configured to send the first shared model to the server. The server is configured to perform first aggregation processing on the first shared models sent by the at least two client sides, to obtain the first shared model.

A sixth aspect of this application provides a client side device that may include a memory, configured to store computer-readable instructions.

The client side device may further include a processor coupled to the memory, configured to execute the computer-readable instructions in the memory, to perform the method described in any one of the first aspect or the possible implementations of the first aspect.

A seventh aspect of this application provides a client side device that may include a memory, configured to store computer-readable instructions.

The client side device may further include a processor coupled to the memory, configured to execute the computer-readable instructions in the memory, to perform the method described in any one of the second aspect or the possible implementations of the second aspect.

An eighth aspect of this application provides a computer-readable storage medium. The computer-readable storage medium stores instructions, and when the instructions are run on a computer apparatus, the computer apparatus is enabled to perform the method described in any one of the first aspect or the possible implementations of the first aspect.

A ninth aspect of this application provides a computer-readable storage medium. The computer-readable storage medium stores instructions, and when the instructions are run on a computer apparatus, the computer apparatus is enabled to perform the method described in any one of the second aspect or the possible implementations of the second aspect.

A tenth aspect of this application provides a computer program product. When the computer program product runs on a computer, the computer is enabled to perform the method described in any one of the first aspect or the possible implementations of the first aspect.

An eleventh aspect of this application provides a computer program product. When the computer program product runs on a computer, the computer is enabled to perform the method described in any one of the second aspect or the possible implementations of the second aspect.

A twelfth aspect of this application provides a chip. The chip is coupled to a memory, and is configured to execute a program stored in the memory, to perform the method described in any one of the first aspect or the possible implementations of the first aspect.

A thirteenth aspect of this application provides a chip. The chip is coupled to a memory, and is configured to execute a program stored in the memory, to perform the method described in any one of the second aspect or the possible implementations of the second aspect.

In the solution provided in this application, the two models are trained on the client side device, one model participates in the federated learning and aggregation process, and the other model does not directly participate in the federated learning and aggregation process. The loss values of the two models are separately obtained based on the two trained models, the loss values of the two models are fused, and the two models are updated based on the fused loss value, to implement information transmission between the two models, so that performance of the private model obtained through training by the client side device is better. In addition, based on the solution provided in this application, a problem that the private model may be overfitted when there is a small amount of data in a training sample of a training data set of the client side device can also be resolved.

**BRIEF DESCRIPTION OF DRAWINGS**

FIG. 1 is a schematic diagram of an artificial intelligence main framework according to an embodiment of the present invention;
FIG. 2 is a schematic diagram of an application environment according to an embodiment of the present invention;
FIG. 3 is a schematic diagram of a structure of a convolutional neural network according to an embodiment of the present invention;

FIG. 4 is a schematic diagram of a structure of a convolutional neural network according to an embodiment of the present invention;

FIG. 5 is a schematic diagram of an architecture of a federated learning system;

FIG. 6 is a schematic flowchart of a model training method applicable to a federated learning system;

FIG. 7 is a schematic diagram of an architecture of a federated learning system according to an embodiment of this application;

FIG. 8 is a schematic flowchart of a model training method according to an embodiment of this application;

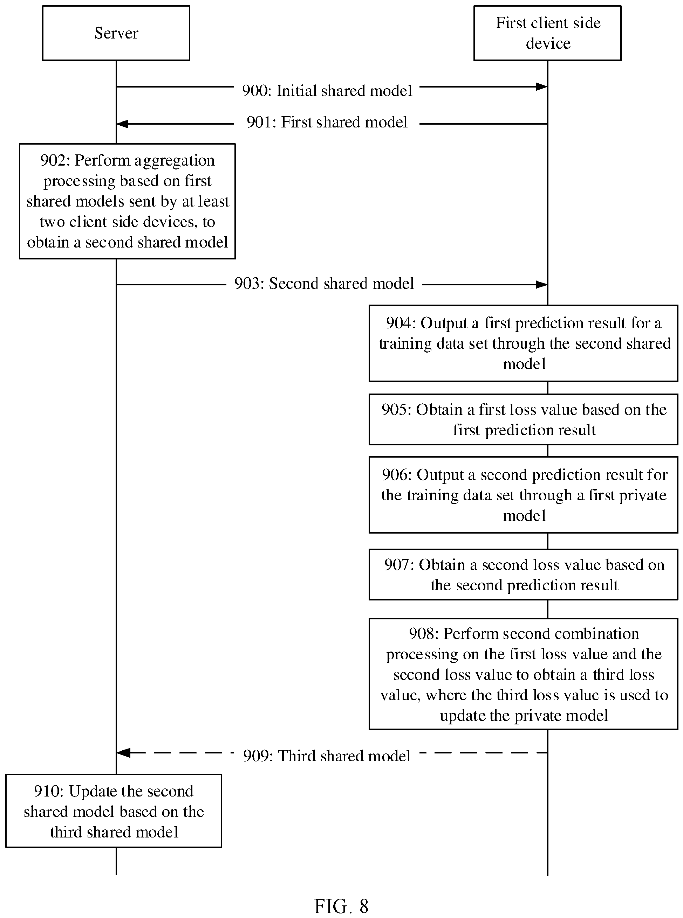

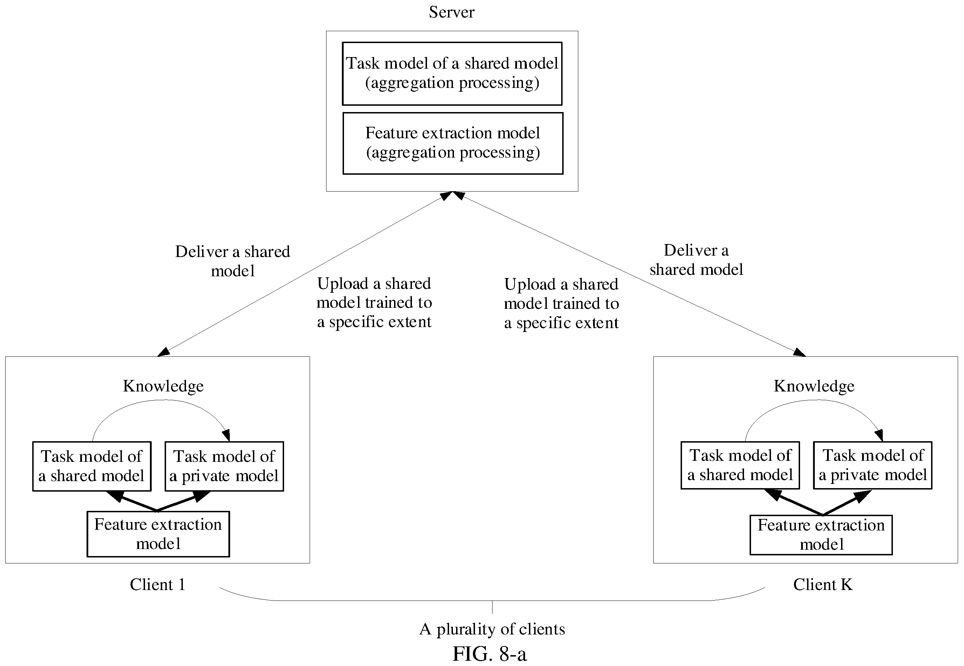

FIG. 8-a is a schematic diagram of an architecture of another federated learning system according to an embodiment of this application;

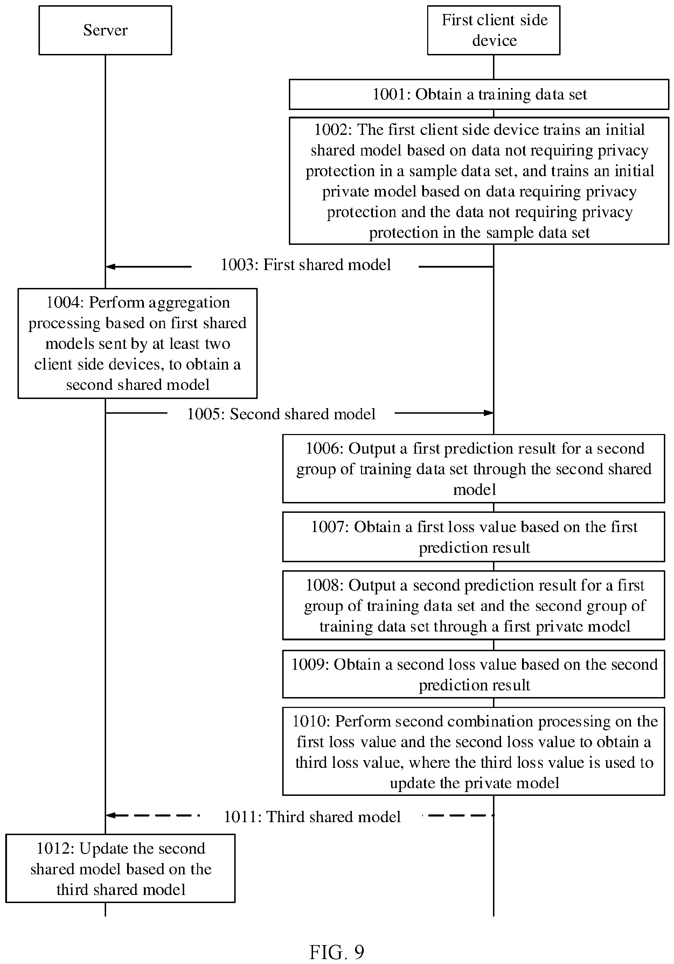

FIG. 9 is a schematic flowchart of a model training method according to an embodiment of this application;

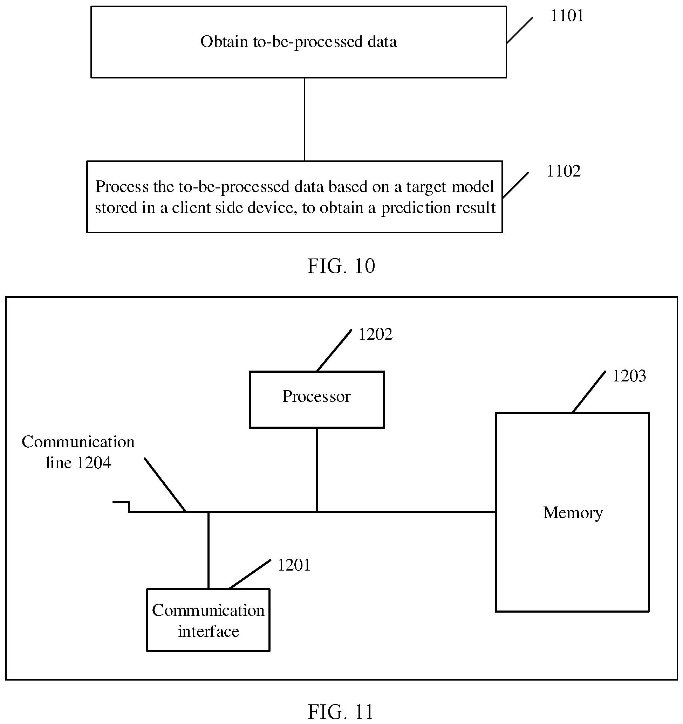

FIG. 10 is a schematic flowchart of a data processing method according to this application;

FIG. 11 is a schematic diagram of a hardware structure of a client side device according to an embodiment of this application;

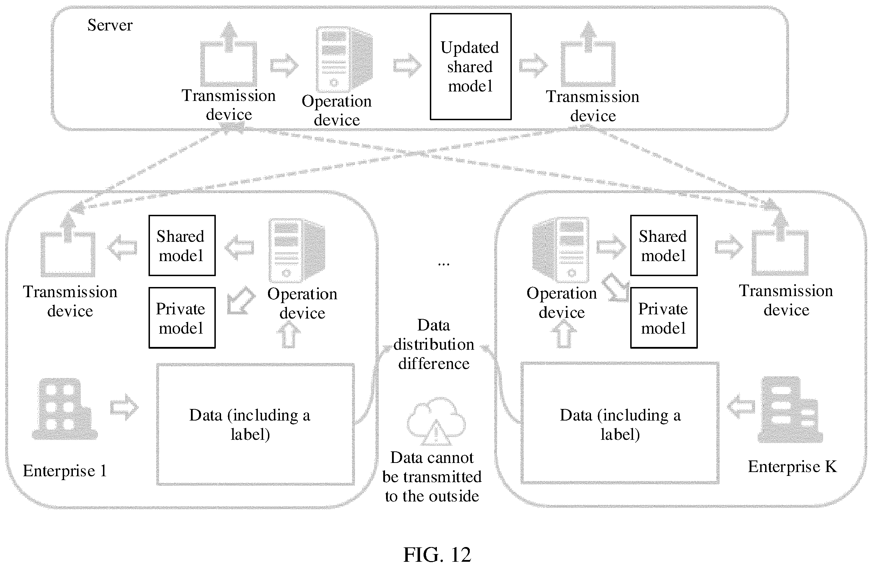

FIG. 12 is a schematic diagram of a possible application scenario of a solution according to an embodiment of this application;

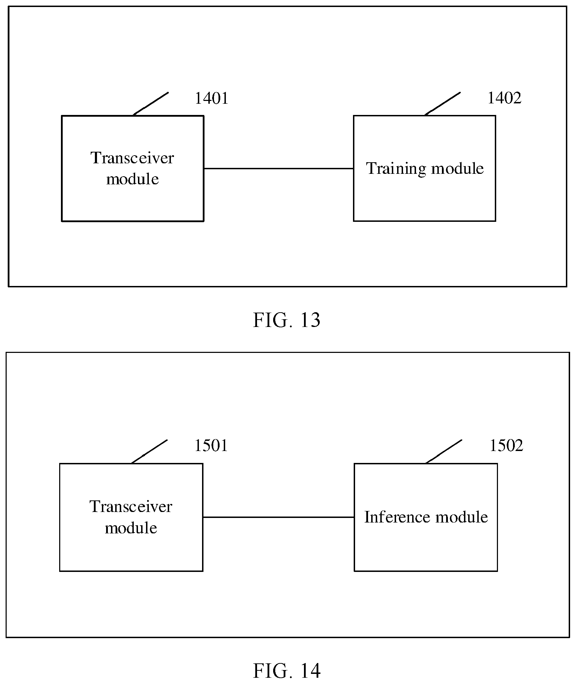

FIG. 13 is a schematic diagram of a structure of a client side device according to an embodiment of this application;

FIG. 14 is a schematic diagram of a structure of another client side device according to an embodiment of this application; and

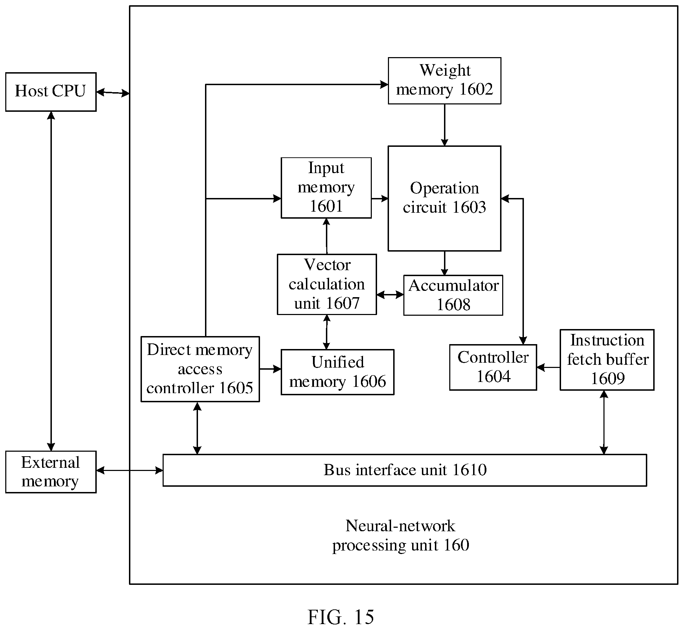

FIG. 15 is a schematic diagram of a structure of a chip according to an embodiment of this application.

## DESCRIPTION OF EMBODIMENTS

The following describes embodiments of this application with reference to the accompanying drawings. It is clear that the described embodiments are merely some rather than all of embodiments of this application. A person of ordinary skill in the art may learn that with technology development and emergence of a new scenario, the technical solutions provided in embodiments of this application are also applicable to a similar technical problem.

This application provides a model training method, and the method is applicable to a federated learning system. To resolve a problem of low performance of a model obtained through training by a client side device in a current federated learning system, in the solutions provided in this application, a shared model and a private model are trained on the client side device. The shared model participates in federated learning, and the private model does not directly participate in federated learning. A first loss value is obtained through a trained shared model, a second loss value is obtained through a trained private model, and a third loss value is obtained by performing combination processing on the first loss value and the second loss value. In the solution provided in this application, the private model is updated based on the third loss value, to improve performance of the private model obtained through training by the client side device. The following separately provides detailed descriptions.

To better understand a field and a scenario to which the solutions provided in this application are applicable, before the technical solutions provided in this application are described in detail, an artificial intelligence main framework, a system architecture to which the solutions provided in this application are applicable, and related knowledge of a neural network are first described.

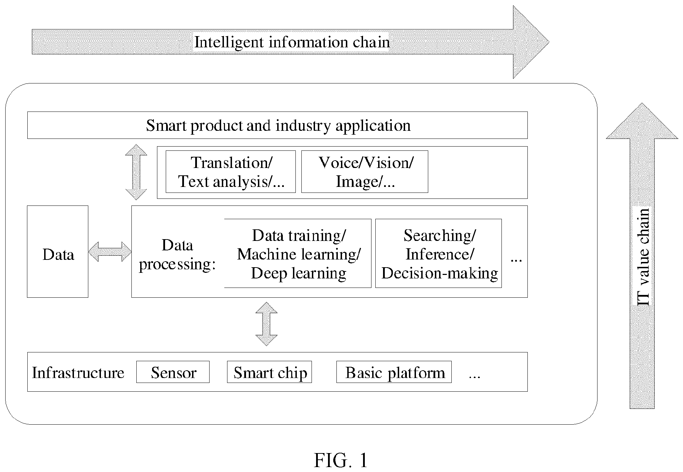

FIG. 1 is a schematic diagram of an artificial intelligence main framework. The main framework describes an overall working procedure of an artificial intelligence system, and is applicable to a requirement of a general artificial intelligence field.

The following describes in detail the foregoing artificial intelligence main framework from two dimensions: "intelligent information chain" (horizontal axis) and "information technology (information technology, IT) value chain" (vertical axis).

The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence".

The "IT value chain" reflects the value brought by artificial intelligence to the information technology industry from an industrial ecology process of an underlying infrastructure, information (providing and processing technology implementation), and a system of artificial intelligence.

(1) Infrastructure:

The infrastructure provides computing capability support for the artificial intelligence system, implements communication with the external world, and implements support by using a basic platform.

The infrastructure can communicate with the outside by using a sensor, and a computing capability of the infrastructure can be provided by a smart chip.

The smart chip herein may be a hardware acceleration chip such as a central processing unit (central processing unit, CPU), a neural-network processing unit (neural-network processing unit, NPU), a graphics processing unit (graphics processing unit, GPU), an application-specific integrated circuit (application-specific integrated circuit, ASIC), or a field programmable gate array (field programmable gate array, FPGA).

The basic platform of the infrastructure may include related platforms, for example, a distributed computing framework and a network, for assurance and support, including cloud storage and computing, an interconnection network, and the like.

For example, the infrastructure can communicate with the outside by using the sensor, to obtain data, and the data is provided to a smart chip in a distributed computing system provided by the basic platform for computing.

(2) Data:

Data at an upper layer of the infrastructure indicates a data source in the field of artificial intelligence. The data relates to a graph, an image, voice, and text, further relates to Internet of things data of a conventional device, and includes service data of an existing system and perception data such as force, displacement, a liquid level, a temperature, and humidity.

(3) Data processing:

The foregoing data processing usually includes a processing manner such as data training, machine learning, deep learning, searching, inference, or decision-making.

Machine learning and deep learning may mean performing symbolic and formalized intelligent information modeling, extraction, preprocessing, training, and the like on data.

Inference is a process in which a human intelligent inference manner is simulated in a computer or an intelligent system, and machine thinking and problem resolving are performed based on formal information according to an inference control policy. A typical function is searching and matching.

Decision-making is a process in which a decision is made after intelligent information is inferred, and usually provides functions such as classification, ranking, and prediction.

(4) General capabilities:

After data processing mentioned above is performed on data, some general capabilities may further be formed based on a data processing result, for example, an algorithm or a general system, such as translation, text analysis, computer vision processing, voice recognition, and image recognition.

(5) Smart product and industry application:

The smart product and the industry application are a product and an application of the artificial intelligence system in various fields, and are package of an overall solution of artificial intelligence, so that decision-making for intelligent information is productized and an application is implemented. Application fields mainly include smart manufacturing, smart transportation, smart home, smart health care, smart security protection, autonomous driving, a safe city, a smart terminal, and the like.

Embodiments of this application may be used in many fields of artificial intelligence, for example, fields such as smart manufacturing, smart transportation, smart home, smart health care, smart security protection, autonomous driving, and a safe city.

Specifically, embodiments of this application may be specifically used in the field in which a (deep) neural network needs to be used for voice enhancement and voice recognition.

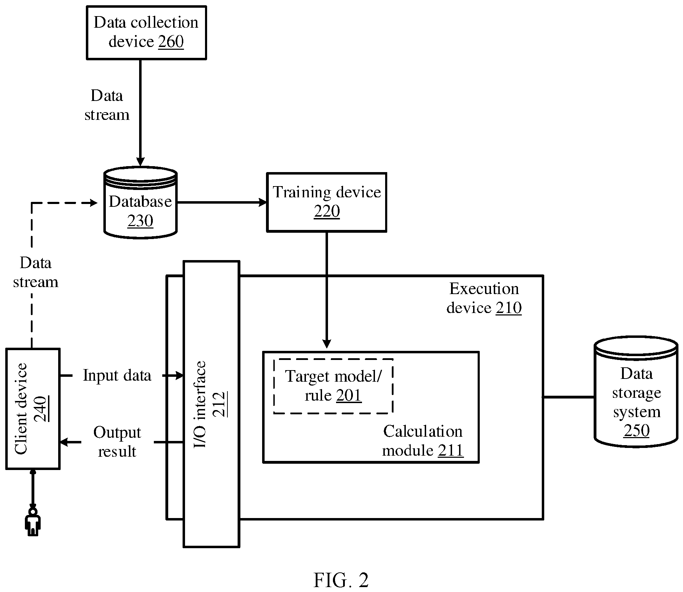

With reference to FIG. 2, an embodiment of the present invention provides a system architecture. A data collection device 260 is configured to collect training data and store the training data in a database 230. The training data may include but is not limited to image data, audio data, and text data. The image data is used as an example. The training data may include training images of different domains or different data sets and labeling results (also referred to as labels) corresponding to the training images. A labeling result of a training image may be a classification result of each to-be-detected object in the training image that is (manually) pre-labeled. A training device 220 generates a target model/rule 201 based on the training data maintained in the database 230.

The target model/rule 201 can be used to implement a data processing method in embodiments of this application. To be specific, to-be-processed data (or data after related preprocessing) is input into the target model/rule 201, a detection result of the to-be-processed data or a prediction result of the to-be-processed data may be obtained. The target model/rule 201 in this embodiment of this application may be specifically a neural network.

A calculation module 211 is further included. The calculation module includes the target model/rule 201. The target model/rule 201 obtained through training by the training device 220 may be used in different systems or devices, for example, used in an execution device 210 shown in FIG. 2. The execution device 210 may be a terminal, such as a mobile phone terminal, a tablet computer, a notebook computer, augmented reality (augmented reality, AR)/virtual reality (virtual reality, VR), a vehicle-mounted terminal, a device (such as a surveillance camera device, a smoke alarm device, or a fire extinguishing device) used for security protection, and a smart speaker, an internet of things (the internet of things) device; or may be a server, a cloud, or the like. In FIG. 2, the execution device 210 is provided with an input/output (input/output, I/O) interface 212, configured to exchange data with an external device. A user may input data to the I/O interface 212 through a client device 240. The input data in this embodiment of this application may include to-be-processed image data, to-be-processed text data, to-be-processed voice data, and the like that are input by the client device. The client device 240 herein may be specifically a terminal device.

In a case shown in FIG. 2, the user may manually input data and the manual operation may be performed in an interface provided by the I/O interface 212. In another case, the client device 240 may automatically send input data to the I/O interface 212. If the client device 240 needs to obtain authorization from the user to automatically send the input data, the user may set corresponding permission in the client device 240. The user may view, on the client device 240, a result output by the execution device 210. The result may be specifically presented in a specific manner, for example, display, sound, or an action. The client device 240 may also serve as a data collector to collect, as new sample data, the input data that is input into the I/O interface 212 and the output result that is output from the I/O interface 212 that are shown in the figure, and store the new sample data into the database 230. Certainly, alternatively, the client device 240 may not perform collection, but the I/O interface 212 directly uses, as new sample data, the input data that is input into the I/O interface 112 and the output result that is output from the I/O interface 112 that are shown in the figure, and stores the new sample data into the database 230.

The following describes how the training device 220 obtains the target model/rule 201 based on the training data. The target model/rule 201 can execute different tasks. For example, the target model/rule 201 may be used to execute a classification task, a regression task, and the like. The task may be understood as an algorithm for automatically analyzing data to obtain a law and predicting unknown data according to the law.

Work at each layer in a deep neural network may be described by using a mathematical expression $\vec{y} = a(W\vec{x}+b)$. From a perspective of a physical layer, the work at each layer in the deep neural network may be understood as completing transformation from input space to output space (that is, from row space to column space of a matrix) by performing five operations on the input space (a set of input vectors). The five operations include: 1. dimension increase/dimension reduction; 2. zooming in/out; 3. rotation; 4. panning; and 5. "bending". The operations 1, 2, and 3 are performed by using $W\vec{x}$, the operation 4 is performed by using +b, and the operation 5 is performed by using a(). The word "space" is used herein for expression because a classified object is not a single thing, but a type of things. Space is a collection of all individuals of such type of things. $W$ is a weight vector, and each value in the vector indicates a weight value of a neuron in the neural network at the layer. The vector $W$ determines the space transformation from the input space to the output space described above, that is, a weight $W$ of each layer controls a method for space transformation. An objective of training the deep neural network is to finally obtain a weight matrix (a weight matrix formed by vectors $W$ at a plurality of layers) at all layers of a trained neural network. Therefore, a training process of the neural network is essentially a manner of learning control of space transformation, and more specifically, learning a weight matrix.

Because it is expected that an output of the deep neural network is as close as possible to a value that is actually expected to be predicted, a current predicted value of the network may be compared with a target value that is actually expected, and then a weight vector at each layer of the neural network is updated based on a difference between the current predicted value and the target value (where certainly, there is usually an initialization process before the first update, that is, a parameter is preconfigured for each layer of the deep neural network). For example, if the predicted value of the network is large, the weight vector is adjusted to lower the predicted value until the neural network can predict the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A larger output value (loss) of the loss function indicates a larger difference. Therefore, training of the deep neural network is a process of minimizing the loss as much as possible.

The target model/rule obtained by the training device 220 may be used in different systems or devices. In FIG. 2, the I/O interface 212 is configured for the execution device 210, to exchange data with an external device. A "user" may input data to the I/O interface 212 through the client device 240.

The execution device 210 may invoke data, code, and the like in a data storage system 250, and may further store data, instructions, and the like in the data storage system 250.

A convolutional neural network (convolutional neuron network, CNN) is a deep neural network with a convolutional structure, and is a deep learning (deep learning) architecture. In the deep learning architecture, multilayer learning is performed at different abstract levels according to a machine learning algorithm. As the deep learning architecture, the CNN is a feed-forward (feed-forward) artificial neural network. Each neuron in the feed-forward artificial neural network makes a response to an overlapping region in an image input into the CNN.

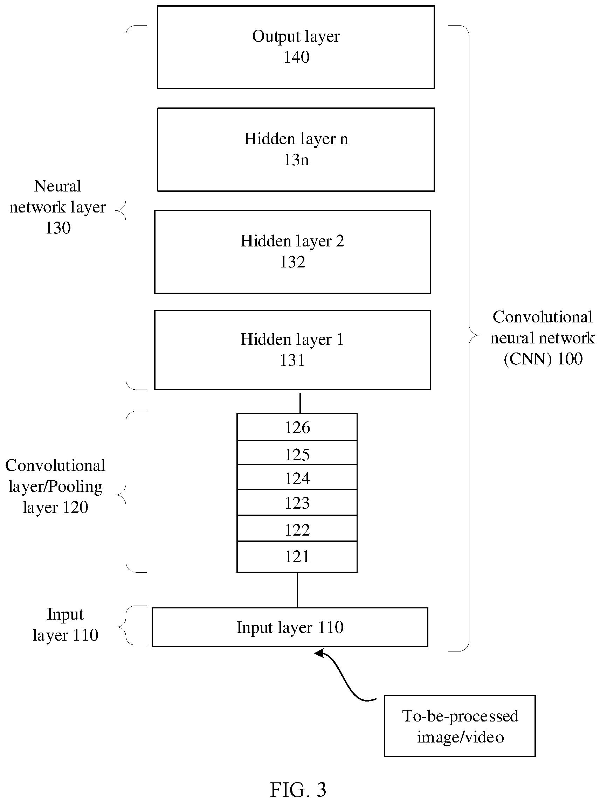

As shown in FIG. 3, a convolutional neural network (CNN) 100 may include an input layer 110, a convolutional layer/pooling layer 120, and a neural network layer 130. The pooling layer is optional.

Convolutional layer/pooling layer 120:

Convolutional layer:

As shown in FIG. 3, for example, the convolutional layer/pooling layer 120 may include layers 121 to 126. In an implementation, the layer 121 is a convolutional layer, the layer 122 is a pooling layer, the layer 123 is a convolutional layer, the layer 124 is a pooling layer, the layer 125 is a convolutional layer, and the layer 126 is a pooling layer. In another implementation, the layer 121 and the layer 122 are convolutional layers, the layer 123 is a pooling layer, the layer 124 and the layer 125 are convolutional layers, and the layer 126 is a pooling layer. That is, an output of a convolutional layer may be used as an input of a subsequent pooling layer, or may be used as an input of another convolutional layer to continue a convolution operation.

The convolutional layer 121 is used as an example. The convolutional layer 121 may include a plurality of convolution operators. A convolution operator is also referred to as a kernel. In image processing, the convolution operator functions as a filter that extracts specific information from an input image matrix. The convolution operator may be essentially a weight matrix, and the weight matrix is usually predefined. In a process of performing a convolution operation on an image, the weight matrix is usually used to process pixels at a granularity level of one pixel (or two pixels, which depends on a value of a stride) in a horizontal direction on the input image, to extract a specific feature from the image. A size of the weight matrix should be related to a size of the picture. It should be noted that a depth dimension (depth dimension) of the weight matrix is the same as a depth dimension of the input image. In a process of performing a convolution operation, the weight matrix extends to an entire depth of the input image. Therefore, a convolution output of a single depth dimension is generated by performing convolution with a single weight matrix. However, in most cases, a plurality of weight matrices with a same dimension rather than the single weight matrix are used. Outputs of the weight matrices are stacked to form a depth dimension of a convolutional image. Different weight matrices may be used to extract different features of the image. For example, one weight matrix is used to extract edge information of the image, another weight matrix is used to extract a specific color of the image, still another weight matrix is used to blur an unnecessary noise in the image, and so on. Because the plurality of weight matrices have the same dimension, feature maps extracted by using the plurality of weight matrices with the same dimension also have a same dimension. Then, the plurality of extracted feature maps with the same dimension are combined to form an output of the convolution operation.

Weight values in the weight matrices need to be obtained through massive training in an actual application. Each weight matrix formed based on the weight values obtained through training may be used to extract information from the input image, to enable the convolutional neural network 100 to perform correct prediction.

When the convolutional neural network 100 includes a plurality of convolutional layers, a larger quantity of general features are usually extracted at an initial convolutional layer (for example, the convolutional layer 121). The general features may be also referred to as low-level features. As a depth of the convolutional neural network 100 increases, a feature extracted at a more subsequent convolutional layer (for example, the convolutional layer 126) is more complex, for example, a high-level semantic feature. A feature with higher semantics is more applicable to a to-be-resolved problem.

Pooling layer:

Because a quantity of training parameters usually needs to be reduced, the pooling layer usually needs to be periodically introduced after a convolutional layer. To be specific, for the layers 121 to 126 in the 120 shown in FIG. 3, one convolutional layer may be followed by one pooling layer, or a plurality of convolutional layers may be followed by one or more pooling layers. Image data is used as an example. In an image processing process, a unique purpose of a pooling layer is to reduce a space size of an image. The pooling layer may include an average pooling operator and/or a maximum pooling operator, to perform sampling on an input image to obtain an image with a small size. The average pooling operator may calculate a pixel value in the image in a specific range, to generate an average value. The maximum pooling operator may be used to select a pixel with a maximum value in a specific range as a maximum pooling result. In addition, similar to a case in which a size of a weight matrix in the convolutional layer should be related to a size of the image, an operator in the pooling layer should be also related to the size of the image. A size of a processed image output from the pooling layer may be less than a size of an image input into the pooling layer. Each pixel in the image output from the pooling layer indicates an average value or a maximum value of a corresponding sub-region of the image input into the pooling layer.

Neural network layer 130:

After processing is performed at the convolutional layer/pooling layer 120, the convolutional neural network 100 still cannot output required output information. As described above, at the convolutional layer/pooling layer 120, only a feature is extracted, and parameters resulting from an input image are reduced. However, to generate final output information (required class information or other related information), the convolutional neural network 100 needs to use the neural network layer 130 to generate an output of one required class or outputs of a group of required classes. Therefore, the neural network layer 130 may include a plurality of hidden layers (131, 132, ..., and 13n shown in FIG. 3) and an output layer 140. Parameters included in the plurality of hidden layers may be obtained through pre-training based on related training data of a specific task type. For example, the task type may include image recognition, image classification, and super-resolution image reconstruction.

The plurality of hidden layers in the neural network layer 130 are followed by the output layer 140, namely, the last layer of the entire convolutional neural network 100. The output layer 140 has a loss function similar to a classification cross-entropy, and the loss function is specifically used to calculate a prediction error. Once forward propagation (for example, propagation from the layer 110 to the layer 140 in FIG. 3 is forward propagation) of the entire convolutional neural network 100 is completed, back propagation (for example, propagation from the layer 140 to the layer 110 in FIG. 3 is back propagation) is started to update weight values and deviations of the layers mentioned above, to reduce a loss of the convolutional neural network 100 and an error between a result output by the convolutional neural network 100 by using the output layer and an ideal result.

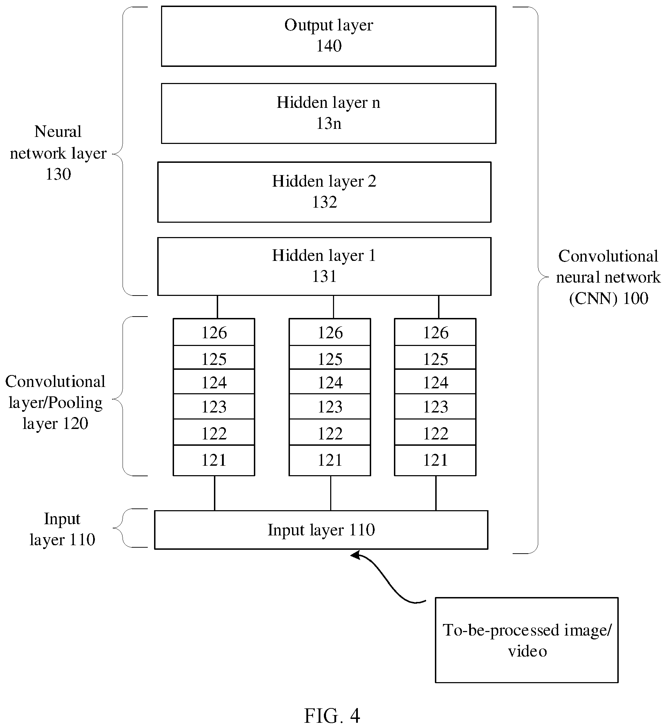

It should be noted that the convolutional neural network 100 shown in FIG. 3 is merely used as an example of a convolutional neural network. In a specific application, the convolutional neural network may alternatively exist in a form of another network model, for example, a network model in which a plurality of convolutional layers/pooling layers are parallel as shown in FIG. 4, and extracted features are all input into the neural network layer 130 for processing.

The solution provided in this application is applicable to a machine learning system. The machine learning system includes a server and at least one client side device. In this application, an example in which the machine learning system is a federated learning system is used for description. To better understand the solution provided in this application, the following describes related knowledge of federated learning.

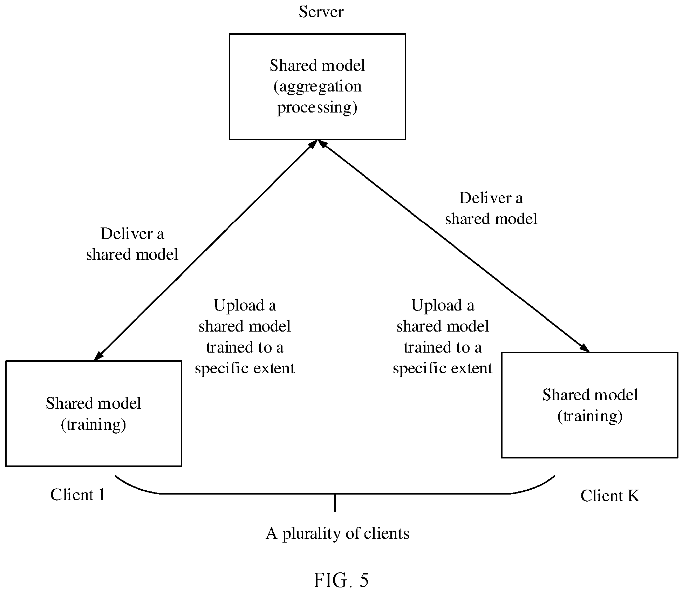

FIG. 5 is a schematic diagram of an architecture of a federated learning system. Federated learning is a machine learning technology used for user privacy protection. A federated learning system usually structurally includes a central server and a plurality of clients as participants. A working procedure mainly includes a model delivery process and a model aggregation process. In the model delivery process, a client downloads a model from the central server, trains, based on locally stored training data, the model downloaded from the central server, and uploads the model to the central server after the model is trained to a specific extent. Training to a specific extent may be understood as a fixed quantity of training rounds. In the model aggregation process, the central server collects models uploaded by clients and aggregates the models. The model delivery process and the model aggregation process are repeated until model convergence. It should be noted that the central server is sometimes referred to as a server in this application, and the central server and the server have a same meaning. In some possible implementations, the server may be a cloud server or a cloud side device. This is not limited in this embodiment of this application. In this application, a client is sometimes referred to as a client side device, and the client and the client side device have a same meaning. For example, the client side device may be a terminal, for example, a mobile phone terminal, a tablet computer, a notebook computer, an augmented reality (augmented reality, AR)/a virtual reality (virtual reality, VR) device, a vehicle-mounted terminal, a device (for example, a surveillance camera device, a smoke alarm device, or a fire extinguishing device) used for security protection, or a smart speaker. In addition, it should be noted that the model in this application includes a neural network model, and a specific type of the model is not limited in this application. For example, the model in this application may be a convolutional neural network model, a cyclic neural network model, or a deep residual network model.

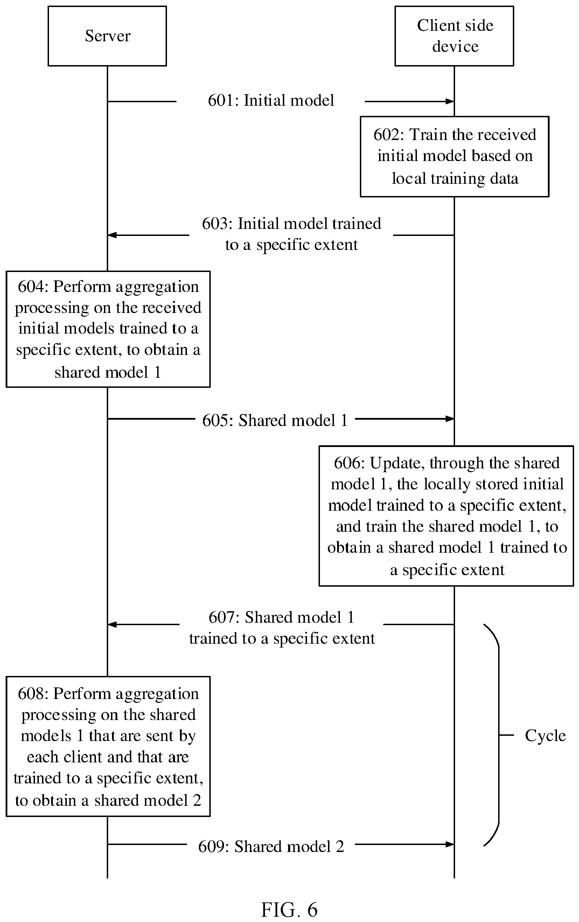

Based on the federated learning system shown in FIG. 5, FIG. 6 is a schematic flowchart of a model training method applicable to the federated learning system. In the federated learning system, procedures performed by a plurality of clients are similar. In the procedure shown in FIG. 6, one of the plurality of clients is used as an example to describe the model training method in the federated learning system. Before model training, an initialization phase is included. In the initialization phase, step 601 is included: A server sends an initial model to each of the plurality of clients. After receiving the initial model, step 602 is included: Each client trains the received initial model based on local training data. After the initial model is trained to a specific extent, step 603 is performed: Send an initial model trained to a specific extent to the server. Training the initial model to a specific extent may be understood as training the initial model for N rounds, where N is a preset positive integer. In this application, training a model to a specific extent may be understood as training the model for a preset quantity of rounds. This is not repeated in this application. In addition, a round of model training may be understood as a process in which the model outputs a prediction result once after a round of training data traversal, and updates a weight parameter of the model once based on the prediction result and a first label. After receiving the initial model that is sent by each client and that is trained to a specific extent, the server performs step 604: Perform aggregation processing on the received initial models trained to a specific extent, to obtain a shared model 1. There may be a plurality of manners of performing aggregation processing on a plurality of models. For example, the server may perform averaging processing on the plurality of received models, and use a result obtained by averaging the plurality of models as a shared model. For another example, the server performs weighting processing on the plurality of received models, and uses a result obtained by performing weighting processing on the plurality of models as a shared model. The following formula 1-1 provides a manner in which the server aggregates the plurality of received models to obtain the shared model.

$$M = \sum_{K=1}^{K} \frac{N_K}{N} M_K$$

(1-1)

In the foregoing formula 1-1, M indicates a shared model, K indicates a total of K clients, $N_K$ indicates a data volume of training samples on a Kth client, N indicates a total data volume of training samples on all clients, and $M_K$ indicates a model that is sent by the Kth client and that is trained to a specific extent. The foregoing formula 1-1 indicates that the server performs aggregation processing on received models $M_K$ sent by K clients to obtain a shared model M, and a larger data volume of training samples on one client indicates that when weighted aggregation processing is performed, a higher weight is assigned to a model obtained through training by the client.

After obtaining the shared model 1, the server performs step 605: Send the shared model 1 to each client. After receiving the shared model 1, the client performs step 606: Update, through the shared model 1, the locally stored initial model trained to a specific extent, and train the shared model 1, to obtain a shared model 1 trained to a specific extent. Step 607 is performed: The client sends the shared model 1 trained to a specific extent to the server, so that the server performs step 608: Perform aggregation processing on the shared models 1 that are sent by the clients and that are trained to a specific extent, to obtain a new shared model, which is referred to as a shared model 2 herein. The shared model 2 is used to update the shared model 1. That the client sends the shared model 1 trained to a specific extent to the server may be understood as that the client sends the entire shared model 1 trained to a specific extent, or may be understood as that the client sends all weight parameters of the shared model 1 trained to a specific extent, or may be understood as that the client sends a part of weight parameters of the shared model 1 trained to a specific extent, where the part of weight parameters herein are a weight parameter that is updated in comparison with the initial model trained to a specific extent and that is of the shared model 1 trained to a specific extent. The following uses a simple example to describe that the client sends the shared model 1 trained to a specific extent to the server. In one manner, the entire shared model 1 trained to a specific extent is sent to the server. If it is assumed that the entire shared model 1 trained to a specific extent includes a weight parameter A, a weight parameter B, and a weight parameter C in total, that the client sends all weight parameters of the shared model 1 trained to a specific extent may be understood as that the client sends only the weight parameter A, the weight parameter B, and the weight parameter C to the server. For another example, because the initial model trained to a specific extent also includes the weight parameter A, the weight parameter B, and the weight parameter C, if it is assumed that compared with the initial model trained to a specific extent, it is determined that the weight parameter A of the shared model 1 trained to a specific extent changes (where a value of the weight parameter is updated), and the weight parameter B and the weight parameter C do not change, that the client sends a part of weight parameters of the shared model 1 trained to a first extent may be understood as that the client sends only the weight parameter A to the server.

The following formula 1-2 provides a manner in which the server performs aggregation processing on the received shared models 1 trained to a specific extent, to obtain the shared model 2.

$$M' = M + \sum_{K=1}^{K} \frac{N_K}{N} \Delta k$$

(1-2)

M' indicates the shared model 2, and $\Delta k$ indicates a weight parameter that is updated in comparison with the initial model trained to a specific extent and that is of the shared model 1 trained to a specific extent. M, K, N, and $N_K$ are understood with reference to the formula 1-1, and are not described herein again.

The server may perform step 609: Send the shared model 2 to each client, so that the client trains the received model, and sends a model trained to a specific extent to the server. This is a cyclic execution process. To be specific, the server performs aggregation processing on the received models sent by the clients and sends, to each client, a model obtained through aggregation processing, and the client trains the received model sent by the server and sends the model trained to a first extent to the server. In a possible implementation, the client may consider that a currently received model is a converged model, that is, consider that the currently received model is a final model. In this case, the client no longer trains the currently received model, and no longer receives a shared model sent by the server. The client may execute an inference task through the currently received model. For example, the client may preset a received $N^{th}$ model as a final model. After receiving N models, the client considers that model training ends, and no longer receives a shared model sent by the server. In a possible implementation, the client may consider that a current model obtained through training is a converged model, that is, consider that the current model obtained through training is a final model. In this case, the client no longer sends, to the server, a current model trained to a specific extent, and no longer receives a shared model subsequently sent by the server. The client may execute an inference task through the current model trained to a specific extent. For example, the client may preset, as a final model, a model obtained by training a received $N^{th}$ model to a specific extent. After the client receives the $N^{th}$ model and trains the model to a specific extent, it may be considered that training ends. The foregoing two implementations are implementations of determining to stop training from a perspective of the client. In some possible implementations, the server may alternatively determine to stop training. For example, the server considers that a model delivered for an $N^{th}$ time is a final model. After delivering the model for the $N^{th}$ time, the server may send a notification instruction to each client, where the notification instruction is used to notify each client that training is completed.

In the model training manner of the federated learning system shown in FIG. 6, there is a problem that a single shared model cannot adapt to data distribution of all clients. This is because data distribution on a client participating in federated learning training is usually non-independent and identically (non-independent and identically, Non-IID), and there is a large difference between data distribution. It is difficult to fit all data distribution through a single model. Different data distribution may be understood as different proportions of a same label in training data sets of different clients.

Based on the foregoing considerations, this application provides a model training method, to resolve a problem that a single model cannot adapt to data that is non-independent and identically on all clients, and a problem of overfilling generated by a private model is avoided according to the model training method provided in this application. The solution provided in this application is applicable to a federated learning system. According to the solution provided in this application, performance of a model obtained through training by a client side device is better. The following describes the solution in detail provided in this application.

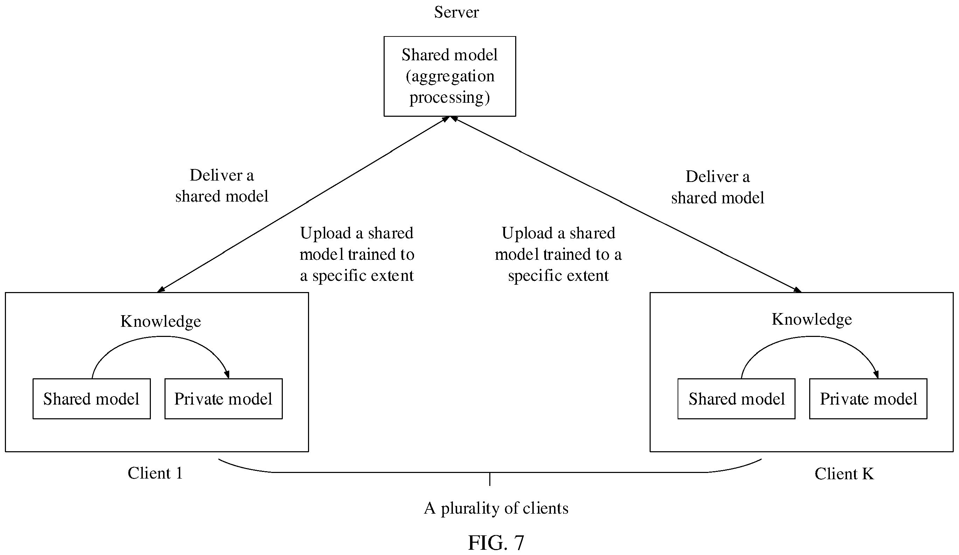

FIG. 7 is a schematic diagram of an architecture of a federated learning system according to an embodiment of this application. As shown in FIG. 7, the federated learning system provided in this application includes a server and at least two client side devices. The server may be a physical device, or a physical resource of the server is abstracted into a logical resource, so that one server becomes a plurality of independent virtual servers, or several servers are used as one server. In a possible implementation, the server is a virtual machine (virtual machine, VM) on a cloud. Interaction procedures between various client side devices and the server are the same. When a model training method provided in this application is described below, an interaction procedure between a client side device and the server and a training process of the client side device are described by using a first client side device as an example. The first client side device may be understood as any one of the at least two client side devices.

Still refer to FIG. 7. For the first client side device, the first client side device stores two models, one model directly participates in a federated learning process, and the other model does not directly participate in the federated learning process. In the following, a model that directly participates in a federated learning process is referred to as a shared model, and a model that does not directly participate in a federated learning and aggregation process is referred to as a private model. In the solution provided in this application, the private model is updated based on locally stored training data and knowledge learned by the shared model in the federated learning process. The following describes the training process in detail.

FIG. 8 is a schematic flowchart of a model training method according to an embodiment of this application. The model training method provided in this application may include the following steps.

900: A server sends an initial shared model to a first client side device.

When FIG. 7 describes the architecture of the federated learning system, it is described that a client side device stores two models: a shared model and a private model. The first client side device sends the shared model to the server, and does not send the private model to the server, where the shared model participates in a federated learning and aggregation process. Participating in the federated learning and aggregation process may be understood with reference to steps 902 to 904, 909, and 910, and is described in detail below. The private model is a model locally stored in the first client side device.

In an initial state, the initial state may be understood as that before the training process starts, the client side device stores an initial private model and an initial shared model. For understanding of the model in this specification, refer to the foregoing definition of the model. The model in this application includes a neural network model, and a specific type of the model is not limited in this application. For example, the model in this application may be a convolutional neural network model, a cyclic neural network model, or a deep residual network model. The definition and understanding of the model are not described again in the following.

The initial shared model is a model obtained by the first client side device from the server. To be specific, in the initial state, the server sends the initial shared model to the first client side device, and initial shared models received by various client side devices are the same. The first client side device receives and stores the initial shared model sent by the server, to train the initial shared model.

The initial private model is a model locally stored in the first client side device. The initial private model and the initial shared model may be different types of models, for example, may be heterogeneous neural networks. The initial private model and the initial shared model may be used for different tasks. For example, the initial shared model uses a multilayer perceptron (multilayer perceptron, MLP) to classify an image, and the initial private model uses a deconvolutional neural network to reconstruct an image. The initial private model and the initial shared model may also be used to execute a same task.

901: The first client side device sends a first shared model to the server.

The first shared model may be understood as a model obtained after the first client side device trains the initial shared model. For example, the first shared model is a model obtained after the first client side device trains the initial shared model to a specific extent based on locally stored training data.

In addition, it should be noted that, that the first client side device sends a first shared model to the server may be understood as that the first client side device sends all weight parameters of the first shared model to the server. Alternatively, that the first client side device sends the first shared model to the server may be understood as that the first client side device sends a part of weight parameters of the first shared model to the server. For example, if the first shared model is obtained by the first client side device by training an initial shared model to some extent, the part of weight parameters are a weight parameter that is different in the first shared model and the initial shared model.

In a preferred implementation, with reference to FIG. 8-a for understanding, the shared model and the private model may use a shared feature extraction model. The feature extraction model used by the shared model and the private model facilitates a subsequent aggregation processing procedure. In the embodiment corresponding to FIG. 8, that is, the initial shared model sent by the server includes an initial feature extraction model and an initial task model. After receiving the initial shared model sent by the server, the first client side device updates a feature extraction model in the initial private model to the initial feature extraction model received from the server. Alternatively, the initial private model directly uses the initial feature extraction model received from the server. The task model may be understood as a model used to execute a different task, for example, a model used to execute a classification task or a model used to execute a regression task. The task may be understood as an algorithm for automatically analyzing data to obtain a law and predicting unknown data according to the law.

902: The server performs aggregation processing based on first shared models sent by at least two client side devices, to obtain a second shared model.

The server may perform aggregation processing on a plurality of received first shared models according to a plurality of aggregation algorithms, to obtain the second shared model. For example, the plurality of first shared models may be averaged to obtain the second shared model, or weighting processing may be performed on the plurality of first shared models to obtain the second shared model, or another preset algorithm may be used to process the plurality of first shared models to obtain the second shared model.

In a possible implementation, the first shared model includes a feature extraction model and a task model. For example, the first shared model includes a feature extraction model 1 and a task model 1. Still refer to FIG. 8-a. The server performs aggregation processing on feature extraction models 1 sent by various client side devices, to obtain a feature extraction model 2, and the server performs aggregation processing on task models 1 sent by the client side devices, to obtain a task model 2. The second shared model includes the feature extraction model 2 and the task model 2. The following formula 2-1 provides a manner in which the server performs aggregation processing on the feature extraction models sent by the client side devices, and the following formula 2-2 provides a manner in which the server performs aggregation processing on the task models sent by the client side devices.

$$F = \frac{1}{N} \sum\nolimits_{K-1}^{K} N_K F_K \qquad (2\text{-}1)$$

$$C_S = \frac{1}{N} \sum\nolimits_{K=1}^{K} N_K C_{S,K} \qquad (2\text{-}2)$$

F indicates an aggregated feature extraction model, Cs indicates an aggregated task model, $N_K$ indicates a data volume of training samples on a $K^{th}$ client, N indicates a total data volume of training samples on all clients, $F_K$

indicates a feature extraction model in a first shared model sent by the Kth client, for example, a feature extraction model 1, and $C_{S,K}$ indicates a task model in the first shared model sent by the Kth client, for example, a task model 1.

903: The first client side device receives the second shared model sent by the server.

After performing aggregation processing based on the first shared models sent by the at least two client side devices, to obtain the second shared model, the server sends the second shared model to each client side device.

In a possible implementation, if the shared model and the private model use a same feature extraction model, after receiving the second shared model sent by the server, the first client side device updates the feature extraction model of the locally stored private model through a feature extraction model of the second shared model.

904: Output a first prediction result for a training data set through the second shared model.

The training data set may be input into the second shared model, to output the first prediction result for the training data set.

An example in which the second shared model is used to execute a classification task is used for description. The first client side device may obtain a sample data set, where the sample data set includes a plurality of samples, and each of the plurality of samples includes a first label. The training data set may be classified through the second shared model to obtain a second label of each sample in the test data set, and the first prediction result may be understood as the second label.

905: The first client side device obtains a first loss value based on the first prediction result.

The first loss value is used to indicate a difference between the first label and the second label.

906: The first client side device outputs a second prediction result for the training data set through a first private model.

The training data set may be input into the first private model, to output the first prediction result for the training data set.

An example in which the first private model is used to execute a classification task is used for description. The first client side device may obtain the sample data set, where the sample data set includes the plurality of samples, and each of the plurality of samples includes the first label. The training data set may be classified through the first private model, to obtain a third label of each sample in the test data set, and the second prediction result may be understood as the third label.

In a possible implementation, if the shared model and the private model use the same feature extraction model, after receiving the second shared model sent by the server, the first client side device updates the feature extraction model of the locally stored private model through the feature extraction model of the second shared model. The first model in step 906 is a private model whose feature extraction model is updated, that is, the feature extraction model of the first private model described in step 906 is the same as that of the second shared model described in step 904.

907: The first client side device obtains a second loss value based on the second prediction result.

The second loss value is used to indicate a difference between the first label and the third label.

It should be noted that step 904 and step 906 are performed in any sequence, for example, the first prediction result and the second prediction result may be obtained at the same time.

908: The first client side device performs second combination processing on the first loss value and the second loss value to obtain a third loss value, where the third loss value is used to update the private model.

The first loss value and the second loss value may be different types of loss values. For example, the first loss value includes one or more of a cross-entropy loss value, a mutual distillation loss value, and a regularization norm loss value, and the second loss value includes one or more of a cross-entropy loss value, a mutual distillation loss value, and a regularization norm loss value. For example, the following provides several manners of performing combination processing on the first loss value and the second loss value to obtain the third loss value.

In a possible implementation, the first loss value is a cross-entropy loss value, and the second loss value is a cross-entropy loss value. A calculation formula of the first loss value is that shown in the formula 2-3, a calculation formula of the second loss value is that shown in the formula 2-4, and a calculation formula of the third loss value is that shown in the formula 2-5.

$$L_{11} = -\sum_i y_{s,i,c} \log\left(\frac{\exp(g_{s,i,c})}{\sum_{c'} \exp(g_{s,i,c'})}\right) \quad (2\text{-}3)$$

$$L_{21} = -\sum_i y_{p,i,c} \log\left(\frac{\exp(g_{p,i,c})}{\sum_{c'} \exp(g_{p,i,c'})}\right) \quad (2\text{-}3)$$

$$L1 = \gamma_1 L_{11} + \gamma_2 L_{21} \quad (2\text{-}4)$$

L11 indicates the first loss value, i indicates an $i^{th}$ sample, $y_i$ indicates a first label of the $i^{th}$ sample, $y_{s.i.c}$ indicates a probability that the $i^{th}$ sample is classified into a class C by the shared model, and $y_{p,i,c}$ indicates a probability that the $i^{th}$ sample is classified into the class C by the private model. In a possible implementation, when the $i^{th}$ sample has maximum $y_{p,i,c}$ in the class C, the $i^{th}$ sample is classified into the class C by the private model; or when the $i^{th}$ sample has maximum $y_{s.i.c}$ in the class C, the $i^{th}$ sample is classified into the class C by the shared model. $\circ$ $g_{s,i,c}$ indicates a probability that the $i^{th}$ sample is classified into the class C by the shared model, and $\Sigma_{c'}\exp(g_{s,i,c'})$ indicates an exponential function sum of all types of probability values in a prediction result for the shared model. L21 indicates the second loss value, $(g_{p,i,c})$ indicates a probability that the $i^{th}$ sample is classified into the class C by the private model, and $\Sigma_{c'}\exp(g_{p,i,c'})$ indicates an exponential function sum of all types of probability values in a prediction result for the private model. L1 indicates the third loss value, $\gamma_1$ and $\gamma_2$ are preset coefficients, where $\gamma_1$ and $\gamma_2$ are both real numbers ranging from 0 to 1 (including 0 and 1), and a sum of $\gamma_1$ and $\gamma_2$ is 1.

In a possible implementation, the first loss function is a mutual knowledge distillation loss, and the second loss function is a mutual knowledge distillation loss. A calculation formula of the first loss value is that shown in the formula 2-5, a calculation formula of the second loss value is that shown in the formula 2-6, and a calculation formula of the third loss value is that shown in the formula 2-7.

$$L_{12}(T) = KL(softmax(g_s,\ T),\ softmax(g_p,\ 1)) \quad (2\text{-}5)$$

$$L_{22}(T) = KL(softmax(g_p,\ T),\ softmax(g_s,\ 1)) \quad (2\text{-}6)$$

$$L2 = \mu_1 L_{12} + \mu_2 L_{22} \quad (2\text{-}7)$$

L12 indicates the first loss value, L22 indicates the second loss value, and L2 indicates the third loss function. $\mu_1$ and $\mu_2$ are preset coefficients, T is a preset temperature coefficient, and T is a real number not less than 1. In a possible implementation, for ease of calculation, T may be a positive integer. For example, T may be a positive integer not less than 1 and not greater than 50. $g_s$ indicates a vector of different types of prediction probabilities of the training data set on the first client side device, and $g_p$ indicates a vector of different types of prediction probabilities of the training data set on the first client side device. KL() is a function used to measure a difference of vector distribution, and may be understood with reference to the formula 2-8.

$$KL(p,q) = \Sigma_c\, p_c\, log\frac{p_c}{q_c} \quad (2\text{-}8)$$

$p_c$ c indicates a $c^{th}$ dimension of a vector p, and $q_c$ indicates a $c^{th}$ dimension of a vector q.

softmax() is a normalized exponential function, and may be understood with reference to the formula 2-9.

$$softmax(g,T) = \frac{\exp(g_c/T)}{\Sigma_{c'}\exp(g_{c'}/T)}\ ,\ \text{for any dimension } c \text{ in } g \quad (2\text{-}9)$$

$$softmax(g,T)$$

g is a vector, g may include a plurality of dimensions, the formula 2-9 indicates that is solved for one dimension $g_c$ in the plurality of dimensions, $g_c$ is a $c^{th}$ dimension of the vector g, and $g_{c'}$ is all dimensions of the vector g.

In a possible implementation, the first loss value is a cross-entropy loss value, and the second loss value is a mutual knowledge distillation loss. In this case, the third loss value may be further understood with reference to the formula 2-10.

$$L3 = \varepsilon_1 L_{11} + \varepsilon_2 L_{22} \quad (2\text{-}10)$$

L3 indicates another manner of calculating the third loss value.

In a possible implementation, the first loss value includes a cross-entropy loss value and a mutual knowledge distillation loss, and the second loss value is a mutual knowledge distillation loss. In this case, the third loss value may be further understood with reference to the formula 2-11.

$$L4 = \delta_1 L_{11} + \delta_2 L_{12} + \delta_3 L_{22} \quad (2\text{-}11)$$

L4 indicates another manner of calculating the third loss value. $\delta_1, \delta_2$, and $\delta_3$ are all real numbers, and a sum of $\delta_1$, $\delta_2$ and $\delta_3$ is 1.

In a possible implementation, the first loss value includes a cross-entropy loss value and a mutual knowledge distillation loss, and the second loss value includes a cross-entropy loss value and a mutual knowledge distillation loss. In this case, the third loss value may be further understood with reference to the formula 2-11.

$$L5 = \varphi_1 L_{11} + \varphi_2 L_{12} + \varphi_3 L_{21} + \varphi_4 L_{22} \quad (2\text{-}11)$$

L5 indicates another manner of calculating the third loss value.

In a possible implementation, the third loss value may be further understood with reference to the formula 2-12.

$$L6 = \sum_i w_i (\theta_{p,i} - \theta_{s,i})^2 \quad (2\text{-}12)$$

L6 indicates another manner of calculating the third loss value, wi indicates a weight value, different weights are set for different samples, $\theta_{p,i}$ indicates an $i^{th}$ weight parameter of a private model trained to a specific extent on the client side, and $\theta_{s,i}$ indicates an $i^{th}$ weight parameter of a shared model trained to a specific extent on the client side device.

It should be noted that, weighting processing may be performed on the first loss value and the second loss value to obtain the third loss value, or the first loss value and the second loss value may be averaged to obtain the third loss value. The foregoing listed several solutions of performing combination processing on the first loss value and the second loss value to obtain the third loss value are not exhaustive. In addition to the foregoing listed several solutions of determining the third loss value based on the first loss value and the second loss value, this application may further include another solution of determining the third loss value based on the first loss value and the second loss value. For example, the third loss value may alternatively be a sum of L5 and L6. In addition, the first loss value includes but is not limited to the cross-entropy loss value, the mutual distillation loss value, and the regularization norm loss value, and the second loss value includes but is not limited to the cross-entropy loss value, the mutual distillation loss value, and the regularization norm loss value.

The private model may be updated based on the third loss value in a plurality of manners. For example, the private model may be updated based on the third loss value according to a gradient optimization method. Specifically, a weight parameter of the feature extraction model of the private model and a weight parameter of the task model of the private model may be updated.

After the private model is updated based on the third loss value, the updated private model may continuously be further trained. For example, the updated private model is continuously trained for a fixed quantity of rounds, to obtain the updated private model.

In a possible implementation, step 909 may be further performed: Send a third shared model to the server.

In addition to updating the private model, the third loss value may be further used to update the second shared model, to obtain the third shared model. Specifically, the third loss value is used to update the feature extraction model and the task model of the second shared model. For example, if the updated feature extraction model of the second shared model is the feature extraction model 2, and the updated task model of the second shared model is the task model 2, the third shared model includes the feature extraction model 2 and the task model 2.

After the second shared model is updated based on the third loss value, the updated second shared model may continuously be further trained, and the third shared model is obtained through a fixed quantity of rounds of training. A fixed quantity of rounds may be preset.

Corresponding to step 909, step 910 may be further included: The server updates the second shared model based on the third shared model.

After receiving third shared models sent by the client side devices, the server performs aggregation processing on the third shared models sent by the client side devices, to obtain a fourth shared model, and updates the second shared model through the fourth shared model.

Step 901 to step 910 may be a cyclic execution process. To be specific, the server performs aggregation processing on the received shared models sent by the client side devices, and sends a shared model obtained through aggregation processing to the client side devices. The client side device trains the received shared model, and updates a locally stored private model through the shared model. The client side device further sends the shared model trained to a specific extent to the server. This process is repeatedly performed until a condition for stopping training is met. In a possible implementation, the client side device may determine to stop training. For example, the client side device may preset, as a final model, a model obtained by training a received $N^{th}$ model to a specific extent. After the client side device receives the $N^{th}$ model and trains the model to a specific extent, it may be considered that training ends. After the training is received, the client side device no longer sends a model trained to a specific extent to the server, and the client side device no longer receives the model from the server side. The client side device may execute an inference task through a finally obtained model, for example, execute a classification task or a regression task. For another example, the client side device may preset the received $N^{th}$ model as a final model. After receiving N models, the client side device considers that model training ends. In a possible implementation, the server may determine to stop training. For example, the server considers that a model delivered for an $N^{th}$ time is a final model. After delivering the model for the $N^{th}$ time, the server may send a notification instruction to each client, where the notification instruction is used to notify each client that training is completed.

It can be learned from the embodiment corresponding to FIG. 8 that, the two models are trained on the client side device, one model participates in the federated learning and aggregation process, and the other model does not directly participate in the federated learning and aggregation process. The loss values of the two models are separately obtained based on the two trained models, the loss values of the two models are combined, and the two models are updated based on the combined loss value, to implement information transmission between the two models, so that performance of the private model obtained through training by the client side device is better. In addition, based on the solution provided in this application, a problem that the private model may be overfitted when there is a small amount of data in a training sample of a training data set of the client side device can also be resolved.

In some possible application scenarios, the client side device may have a very high requirement for data privacy protection. In this case, training data of the client side device may be classified based on a requirement for privacy protection. Data having a high privacy protection requirement participates only in a training process of the private model, and remaining data may participate in both a training process of the shared model and the training process of the private model. The following provides detailed descriptions.

Based on the embodiment corresponding to FIG. 8, further descriptions are provided. In a possible implementation, the training data set includes a first training data set and a second training data set, the first training data set is preset to require privacy protection, the second training data set is preset to not require privacy protection, the first training data set and the second training data set are used to train the private model stored in the client side device, to obtain a trained private model, and the second training data set is further used to train the second shared model, to obtain a trained second shared model. FIG. 9 is a schematic flowchart of another model training method according to an embodiment of this application. As shown in FIG. 9, the another model training method provided in this application may include the following steps.

1001: A first client side device obtains a training data set.

The first client side device may obtain a sample data set, where the sample data set includes a plurality of samples, and each of the plurality of samples includes a first label. Each sample in the sample data set is pre-labeled with a privacy level. Samples that require privacy protection may be classified into one group, and samples that do not require privacy protection may be classified into another group. For example, the samples that require privacy protection are a first group of sample data set, and the samples that do not require privacy protection are a second group of sample data set.

1002: The first client side device trains an initial shared model based on data not requiring privacy protection in the sample data set, and trains an initial private model based on data requiring privacy protection and the data not requiring privacy protection in the sample data set.

Because the initial shared model needs to participate in a federated learning and aggregation process, in consideration of privacy protection, the initial shared model is trained based on only the data not requiring privacy protection in the sample data set, and the initial shared model is not trained based on the data requiring privacy protection. In other words, the initial shared model is trained based on only the second group of sample data set. For understanding of the initial shared model, refer to the descriptions of the initial shared model in step 901 in the embodiment corresponding to FIG. 8. Details are not described herein again.

Because the private model does not directly participate in the federated learning and aggregation process, and is stored and trained only on a client side device, both the first group of sample data set and the second group of sample data set may train the initial private model.

After the second group of sample data set is input into the initial shared model, a feature extraction model of the initial shared model may extract a feature of a sample, transmit the feature of the sample to a task model of the initial shared model, to output a prediction result, and determine a first loss value based on a difference between the prediction result and the first label.

After the first group of sample data set and the second group of sample data set are input into the initial private model, a feature extraction model of the initial private model may extract a feature of a sample, transmit the feature of the sample to a task model of the initial private model, to output a prediction result, and determine a second loss value based on a difference between the prediction result and the first label.

A third loss value may be obtained by performing combination processing on the first loss value and the second loss value. The initial private model and the initial shared model may be updated based on the third loss value by using a gradient optimization method. Specifically, a weight parameter of the feature extraction model of the initial private model and a weight parameter of the task model of the initial private model may be updated, to obtain a trained private model, and a weight parameter of the feature extraction model of the initial shared model and a weight parameter of the task model of the initial shared model may be further updated.

1003: The first client side device sends a first shared model to a server.

1004: The server performs aggregation processing based on first shared models sent by at least two client side devices, to obtain a second shared model.

1005: The first client side device receives the second shared model sent by the server.

For understanding of step 1003 to step 1005, refer to step 901 to step 903 in the embodiment corresponding to FIG. 8. Details are not described herein again.

1006: Output a first prediction result for a second group of training data set through the second shared model.

1007: The first client side device obtains the first loss value based on the first prediction result.

1008: The first client side device outputs a second prediction result for a first group of training data set and the second group of training data set through a first private model.

1009: The first client side device obtains the second loss value based on the second prediction result.

1010: The first client side device performs second combination processing on the first loss value and the second loss value to obtain a third loss value, where the third loss value is used to update the private model.

In a possible implementation, step 1011 may be further performed: Send a third shared model to the server.

For step 1011, step 1012 may be further included: The server updates the second shared model based on the third shared model.

For understanding of step 1006, refer to step 904 in the embodiment corresponding to FIG. 8. For understanding of step 1007 to step 1012, refer to step 905 to step 910 in the embodiment corresponding to FIG. 8. Details are not described herein again.

It can be learned from the embodiment corresponding to FIG. 9 that, in some scenarios in which the client side device may have a very high requirement for data privacy protection, training data of the client side device may be classified based on a requirement for privacy protection. Data having a high privacy protection requirement participates only in a training process of the private model, and remaining data may participate in both a training process of the shared model and the training process of the private model.

The foregoing describes the model training method provided in this application. The private model obtained through training in this application may be used to execute an inference task, for example, may be used to execute a classification task or a regression task. This is not limited in embodiments of this application. The following describes a data processing method in detail provided in this application.

FIG. 10 is a schematic flowchart of a data processing method according to this application.

The data processing method provided in this application may include the following steps.

1101: Obtain to-be-processed data.

The to-be-processed data in this application may be image data, text data, voice data, video data, or the like.

1102: Process the to-be-processed data based on a target model stored in a client side device, to obtain a prediction result.

A feature of the to-be-processed data is extracted through a feature extraction model of the target model, and the extracted feature is input into a task model of the target model, to output a prediction result through the task model.

The target model may be a model obtained through training according to the model training method described in FIG. 8 or FIG. 9.

In a possible implementation, the target model is obtained by updating a first private model based on a third loss value, the third loss value is obtained by performing second combination processing on a first loss value and a second loss value, the first loss value is obtained based on a first prediction result, the first prediction result is a prediction result output by a second shared model for a training data set, the second shared model is obtained from a server, the second model is obtained after the server performs first aggregation processing on first shared models sent by at least two client sides, the second loss value is obtained based on a second prediction result, and the second prediction result is a prediction result output by the first private model for the training data set. It can be learned from the second aspect that, in the solution provided in this application, the target model is a model obtained through training by using a local training data set and knowledge learned by using a shared model. Compared with a model obtained through training by a client side device in a conventional technology, the target model in this application has better performance.

In a possible implementation, the second shared model includes a first feature extraction model, a private model includes a second feature extraction model and a first task model, the first feature extraction model is used by a first client side device to update the second feature extraction model to the first feature extraction model after receiving the second shared model sent by the server, the third loss value is used to update the first feature extraction model and the first task model, and the target model includes an updated first feature extraction model and an updated first task model.

In a possible implementation, the third loss value is further used to update the second shared model to obtain a third shared model, and the third shared model is sent to the server, so that the server updates the second shared model.

In a possible implementation, the first loss value includes one or more of a cross-entropy loss value and a mutual distillation loss value, and the second loss value includes one or more of a cross-entropy loss value and a mutual distillation loss value.

In a possible implementation, the training data set includes a first training data set and a second training data set, the first training data set is preset to require privacy protection, the second training data set is preset to not require privacy protection, the first prediction result is a prediction result output by the second shared model for the second training data set, and the second prediction result is a prediction result output by the first private model for the first training data set and the second training data set.

In a possible implementation, the third loss value is obtained by performing weighting processing on the first loss value and the second loss value.

In a possible implementation, the third loss value is specifically obtained by performing averaging processing on the first loss value and the second loss value.

The foregoing describes the model training method and the data processing method provided in this application. According to the solutions provided in embodiments of this application, a private model is updated based on locally stored training data and knowledge learned by a shared model in a federated learning process, so that performance of a model obtained through training is better. It may be understood that, to implement the foregoing functions, the client side device includes corresponding hardware structures and/or software modules for performing the functions. A person of ordinary skill in the art should easily be aware that, in combination with the examples described in embodiments disclosed in this specification, modules, algorithms and steps can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

From a perspective of a hardware structure, the client side device in FIG. 8 to FIG. 10 may be implemented by one physical device, or may be implemented by a plurality of physical devices, or may be a logical functional module in one physical device. This is not specifically limited in embodiments of this application. The following describes, based on the foregoing model training method and data processing method, a client side device provided in this application. The client side device is configured to perform the steps of the methods corresponding to FIG. 8 to FIG. 10, or the client side device is configured to perform the steps of the method corresponding to FIG. 10.

For example, the client side device may be implemented by the computer device in FIG. 11. FIG. 11 is a schematic diagram of a hardware structure of a client side device according to an embodiment of this application. The client side device includes a communication interface 1201 and a processor 1202, and may further include a memory 1203.

The communication interface 1201 may use any apparatus such as a transceiver, and is configured to communicate with another device or a communication network. In this solution, the client side device may communicate with a server through the communication interface 1201, for example, uploading a model or downloading a model. In a possible implementation, the communication interface 1201 may communicate with the server by using a technology such as the Ethernet, a radio access network (radio access network, RAN), or a wireless local area network (wireless local area network, WLAN). In a possible implementation, with reference to FIG. 12, when the client side device is jointly implemented by a plurality of physical devices, the communication interface may be considered as a transmission device. For example, the communication interface may be considered as a computer communication device such as a gateway, a switch, or a wireless router.

The processor 1202 includes but is not limited to one or more of a central processing unit (central processing unit, CPU), a network processor (network processor, NP), an application-specific integrated circuit (application-specific integrated circuit, ASIC), or a programmable logic device (programmable logic device, PLD). The PLD may be a complex programmable logic device (complex programmable logic device, CPLD), a field-programmable gate array (field-programmable gate array, FPGA), generic array logic (generic array logic, GAL), or any combination thereof. The processor 1202 is responsible for a communication line 1204 and general processing; and may further provide various functions, including timing, peripheral interfacing, voltage regulation, power management, and another control function.

With reference to FIG. 12, when the client side device is jointly implemented by a plurality of physical devices, the processor may be considered as an operation device, and the processor may be considered as an operation component including the processor 1202. The memory 1203 may be configured to store data used by the processor 1202 when the processor 1202 performs an operation.

The memory 1203 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. However, this is not limited thereto. The memory may exist independently, and is connected to the processor 1202 through the communication line 1204. Alternatively, the memory 1203 may be integrated with the processor 1202. If the memory 1203 and the processor 1202 are mutually independent components, the memory 1203 is connected to the processor 1202. For example, the memory 1203 and the processor 1202 may communicate with each other through the communication line. The communication interface 1201 and the processor 1202 may communicate with each other through the communication line, and the communication interface 1201 may alternatively be connected to the processor 1202 directly.

The communication line 1204 may include any quantity of interconnected buses and bridges, and the communication line 1204 links together various circuits including one or more processors 1202 represented by the processor 1202 and a memory represented by the memory 1203. The communication line 1204 may further link various other circuits such as a peripheral device, a voltage stabilizer, and a power management circuit. These are well known in the art, and therefore are not further described in this specification.

In a specific implementation, the client side device may include a memory, configured to store computer-readable instructions. The communication interface and the processor coupled to the memory may be further included. The communication interface is configured to perform step 900, step 901, step 903, and step 909 in the embodiment corresponding to FIG. 8. The processor is configured to execute the computer-readable instructions in the memory, to perform step 904 to step 908 in the embodiment corresponding to FIG. 8.

In a specific implementation, the client side device may include a memory, configured to store computer-readable instructions. The communication interface and the processor coupled to the memory may be further included. The communication interface is configured to perform step 1011, step 1003, step 1005, and step 1011 in the embodiment corresponding to FIG. 9. The processor is configured to execute the computer-readable instructions in the memory, to perform step 1002 and step 1006 to step 1010 in the embodiment corresponding to FIG. 9.

In a possible implementation, the client side device may include a memory, configured to store computer-readable instructions. The communication interface and the processor coupled to the memory may be further included. The communication interface is configured to perform step 1101 in FIG. 10, and the processor is configured to perform step 1102 in the embodiment corresponding to FIG. 10.

In this embodiment of this application, the communication interface may be considered as a transceiver module 1401 of the client side device, the processor having a processing function may be considered as a training module 1402 of the client side device, and the memory may be considered as a storage module (not shown in the figure) of the client side device. FIG. 13 is a schematic diagram of a structure of a client side device according to an embodiment of this application.

In this embodiment of this application, the communication interface may alternatively be considered as a transceiver module 1501 of the client side device, the processor having a processing function may be considered as an inference module 1502 of the client side device, and the memory may be considered as a storage module (not shown in the figure) of the client side device. FIG. 14 is a schematic diagram of a structure of another client side device according to an embodiment of this application.

FIG. 12 is a schematic diagram of a possible application scenario of a solution according to an embodiment of this application. Data of an enterprise is of great potential value. However, for privacy purposes, data cannot be simply exchanged between enterprises. In addition, data distribution of different enterprises usually varies greatly. To resolve these problems, enterprises join the federated learning system to build a model together. Each enterprise may be considered as having a client side device, and the client side device may be understood as one device or a combination of a plurality of devices. For example, with reference to FIG. 12, the client side device may include an operation device and a transmission device. For a process performed by the operation device, refer to the processor mentioned above for understanding. For a process performed by the transmission device, refer to the communication interface mentioned above for understanding. Details are not described herein again. For an interaction process between each client side device and the server, refer to the embodiments corresponding to FIG. 8 and FIG. 9 for understanding. Details are not described herein again.

It should be understood that the foregoing is merely an example provided in embodiments of this application. In addition, the client side device may have more or fewer components than shown components, may combine two or more components, or may have different component configurations.

All or some of the foregoing embodiments may be implemented through software, hardware, firmware, or any combination thereof. When software is used to implement embodiments, all or some of embodiments may be implemented in a form of a computer program product.

The client side device provided in embodiments of this application may be a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, to enable the chip to perform the model training method described in the embodiment shown in FIG. 8 or FIG. 9. In another possible implementation, the chip is enabled to perform the data processing method described in the embodiment shown in FIG. 10. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

Specifically, the processing unit or the processor may be a central processing unit (central processing unit, CPU), a network processor (neural-network processing unit, NPU), a graphics processing unit (graphics processing unit, GPU), a digital signal processor (digital signal processor, DSP), an application-specific integrated circuit (application-specific integrated circuit, ASIC), a field programmable gate array (field programmable gate array, FPGA), another programmable logic device, a discrete gate, a transistor logic device, a discrete hardware component, or the like. The general-purpose processor may be a microprocessor or any regular processor or the like.

Specifically, FIG. 15 is a schematic diagram of a structure of a chip according to an embodiment of this application. The chip may be represented as a neural-network processing unit NPU 160. The NPU 160 is mounted to a host CPU (Host CPU) as a co-processor, and the host CPU allocates a task. A core part of the NPU is an operation circuit 1603, and a controller 1604 controls the operation circuit 1603 to extract matrix data in a memory and perform a multiplication operation.

In some implementations, the operation circuit 1603 includes a plurality of processing engines (processing engines, PEs) inside. In some implementations, the operation circuit 1603 is a two-dimensional systolic array. The operation circuit 1603 may alternatively be a one-dimensional systolic array or another electronic circuit capable of performing mathematical operations such as multiplication and addition. In some implementations, the operation circuit 1603 is a general-purpose matrix processor.

For example, it is assumed that there is an input matrix A, a weight matrix B, and an output matrix C. The operation circuit fetches data corresponding to the matrix B from a weight memory 1602, and buffers the data on each PE in the operation circuit. The operation circuit fetches data of the matrix A from an input memory 1601 to perform a matrix operation on the matrix B, to obtain a partial result or a final result of the matrix, which is stored in an accumulator (accumulator) 1608.

A unified memory 1606 is configured to store input data and output data. The weight data is directly transferred to the weight memory 1602 by using a direct memory access controller (direct memory access controller, DMAC) 1605. The input data is also transferred to the unified memory 1606 by using the DMAC.

A bus interface unit (bus interface unit, BIU) 1610 is configured to interact with the DMAC and an instruction fetch buffer (Instruction Fetch Buffer, IFB) 1609 through an AXI bus.

The bus interface unit (bus interface unit, BIU) 1610 is used by the instruction fetch buffer 1609 to obtain instructions from an external memory, and is further used by the direct memory access controller 1605 to obtain original data of the input matrix A or the weight matrix B from the external memory.

The DMAC is mainly configured to transfer input data in the external memory DDR to the unified memory 1606, transfer weight data to the weight memory 1602, or transfer input data to the input memory 1601.

A vector calculation unit 1607 includes a plurality of operation processing units. If required, further processing is performed on an output of the operation circuit, for example, vector multiplication, vector addition, an exponential operation, a logarithmic operation, or size comparison. The vector calculation unit 1607 is mainly configured to perform network calculation at a non-convolutional/fully connected layer in a neural network, for example, batch normalization (batch normalization), pixel-level summation, and upsampling on a feature plane.

In some implementations, the vector calculation unit 1607 can store a processed output vector in the unified memory 1606. For example, the vector calculation unit 1607 may apply a linear function or a non-linear function to the output of the operation circuit 1603, for example, perform linear interpolation on a feature plane extracted at a convolutional layer. For another example, the linear function or the non-linear function is applied to a vector of an accumulated value to generate an activation value. In some implementations, the vector calculation unit 1607 generates a normalized value, a pixel-level summation value, or both. In some implementations, the processed output vector can be used as an activation input to the operation circuit 1603, for example, to be used in a subsequent layer in the neural network.

The instruction fetch buffer (instruction fetch buffer) 1609 connected to the controller 1604 is configured to store instructions used by the controller 1604.

The unified memory 1606, the input memory 1601, the weight memory 1602, and the instruction fetch buffer 1609 are all on-chip memories. The external memory is private for a hardware architecture of the NPU.

An operation at each layer in a recurrent neural network may be performed by the operation circuit 1603 or the vector calculation unit 1607.

The processor mentioned anywhere above may be a general-purpose central processing unit, a microprocessor, an ASIC, or one or more integrated circuits configured to control program execution of the method in FIG. 8 or FIG. 9, or in another possible implementation, an integrated circuit configured to control program execution of the method in FIG. 10.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected based on actual needs to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented through corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a read-only memory (read-only memory, ROM), a random access memory (random access memory, RAM), a magnetic disk, or an optical disc of a computer, and includes several instructions for instructing a computer device (which may be a personal computer, a server, a network device, or the like) to perform the methods described in embodiments of this application.

All or some of the foregoing embodiments may be implemented through software, hardware, firmware, or any combination thereof. When software is used to implement embodiments, all or some of embodiments may be implemented in a form of a computer program product.

An embodiment of this application further provides a computer-readable storage medium. The computer-readable storage medium stores a program used to train a model. When the program runs on a computer, the computer is enabled to perform the steps in the method described in the embodiment shown in FIG. 8 or FIG. 9.

An embodiment of this application further provides a computer-readable storage medium. The computer-readable storage medium stores a program used for data processing. When the program runs on a computer, the computer is enabled to perform the steps in the method described in the embodiment shown in FIG. 10.

An embodiment of this application further provides a digital processing chip. A circuit and one or more interfaces that are configured to implement the processor or a function of the processor are integrated into the digital processing chip. When a memory is integrated into the digital processing chip, the digital processing chip may complete the method steps in any one or more of the foregoing embodiments. When a memory is not integrated into the digital processing chip, the digital processing chip may be connected to an external memory through a communication interface. The digital processing chip implements, based on program code stored in the external memory, actions performed by the client side device in the foregoing embodiments.

An embodiment of this application further provides a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk (SSD)), or the like.

A person of ordinary skill in the art may understand that all or a part of the steps of the methods in embodiments may be implemented by a program instructing relevant hardware. The program may be stored in a computer-readable storage medium. The storage medium may include: a ROM, a RAM, a magnetic disk, or an optical disc.

The model training method, the data processing method, and the related device provided in embodiments of this application are described in detail above. The principle and the implementation of this application are described in this specification by using specific examples. The descriptions about the embodiments are merely provided to help understand the method and the core idea of this application. In addition, a person of ordinary skill in the art makes variations to the specific implementations and the application scope based on the idea of this application. Therefore, the content of this specification shall not be construed as a limitation on this application.

In the specification, claims, and the accompanying drawings of this application, the terms "first", "second", and the like are intended to distinguish between similar objects but do not necessarily indicate a specific order or sequence. It should be understood that the data termed in such a way is interchangeable in proper circumstances, so that embodiments described herein can be implemented in other orders than the order illustrated or described herein. The term "and/or" in this application describes only an association relationship between associated objects and indicates that three relationships may exist. For example, A and/or B may represent the following three cases: Only A exists, both A and B exist, and only B exists. In addition, the character "/" in this specification generally indicates an "or" relationship between the associated objects. Moreover, the terms "including", "having", and any other variants thereof are intended to cover non-exclusive inclusion, for example, a process, method, system, product, or device that includes a series of steps or modules is not necessarily limited to those steps or modules that are clearly listed, but may include other steps or modules that are not clearly listed or that are inherent to such a process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical obj ective to be achieved, provided that same or similar technical effects can be achieved. Division into the modules in this application is logical division. In actual application, there may be another division manner. For example, a plurality of modules may be combined or integrated into another system, or some features may be ignored or not performed. In addition, the displayed or discussed mutual coupling or direct coupling or communication connection may be performed through some ports, and the indirect coupling or communication connection between modules may be in an electrical form or another similar form. This is not limited in this application. In addition, modules or sub-modules described as separate components may be or may not be physically separated, or may be or may not be physical modules, or may be allocated to a plurality of circuit modules. Objectives of the solutions of this application may be achieved by selecting some or all of the modules based on actual requirements.

**Claims**

1. A model training method, wherein the method is applicable to a machine learning system, the machine learning system comprises a server and at least two client side devices, a first client side device is any one of the at least two client side devices, and the method comprises:

   receiving a first shared model sent by the server;
   outputting a first prediction result for a data set through the first shared model;
   obtaining a first loss value based on the first prediction result;
   outputting a second prediction result for the data set through a first private model of the first client side device;
   obtaining a second loss value based on the second prediction result; and
   performing combination processing on the first loss value and the second loss value to obtain a third loss value, wherein the third loss value is used to update the first private model.

2. The method according to claim 1, wherein the first shared model and the first private model share a feature extraction model.

3. The method according to claim 2, wherein before the first shared model is received, the first terminal device stores a second private model; and the method further comprises:
   updating a feature extraction model of the second private model based on the feature extraction model of the first shared model, to obtain the first private model.

4. The method according to any one of claims 1 to 3, wherein the third loss value is further used to update the first shared model to obtain a second shared model; and the method further comprises:
sending the second shared model to the server, wherein the second shared model is used by the server to update the first shared model.

5. The method according to any one of claims 1 to 4, wherein the first loss value comprises at least one of a cross-entropy loss value and a mutual distillation loss value, and the second loss value comprises at least one of a cross-entropy loss value and a mutual distillation loss value.

6. The method according to any one of claims 1 to 5, wherein the data set comprises a first data set requiring privacy protection and a second data set not requiring privacy protection;
the outputting a first prediction result for a data set through the first shared model comprises:

outputting the first prediction result for the second data set through the first shared model; and
the outputting a second prediction result for the data set through a first private model of the first client side device comprises:
outputting the second prediction result for the first data set and the second data set through the first private model.

7. The method according to any one of claims 1 to 6, wherein the performing combination processing on the first loss value and the second loss value to obtain a third loss value comprises:
performing weighting processing on the first loss value and the second loss value to obtain the third loss value.

8. The method according to claim 7, wherein the performing weighting processing on the first loss value and the second loss value to obtain the third loss value comprises:
performing averaging processing on the first loss value and the second loss value to obtain the third loss value.

9. A data processing method, wherein the method is applicable to a machine learning system, the machine learning system comprises a server and at least two client side devices, a first client side device is any one of the at least two client side devices, and the method comprises:

obtaining to-be-processed data; and
processing the to-be-processed data based on a target model stored in the first client side device, to obtain a prediction result, wherein the target model is obtained by updating a first private model based on a third loss value, the third loss value is obtained by performing combination processing on a first loss value and a second loss value, the first loss value is obtained based on a first prediction result, the first prediction result is a prediction result that is output by a first shared model for a data set, the first shared model is obtained from the server, the second loss value is obtained based on a second prediction result, and the second prediction result is a prediction result that is output by the first private model for the data set.

10. The method according to claim 9, wherein the first shared model and the first private model share a feature extraction model.

11. The method according to claim 10, wherein before receiving the first shared model, the first terminal device stores a second private model, and the first private model is obtained by updating a feature extraction model of the second private model based on the feature extraction model of the first shared model.

12. The method according to any one of claims 9 to 11, wherein the third loss value is further used to update the first shared model to obtain a second shared model, and the second shared model is sent to the server to enable the server to update the first shared model.

13. The method according to any one of claims 9 to 12, wherein the first loss value comprises at least one of a cross-entropy loss value and a mutual distillation loss value, and the second loss value comprises at least one of a cross-entropy loss value and a mutual distillation loss value.

14. The method according to any one of claims 9 to 13, wherein the data set comprises a first data set requiring privacy protection and a second data set not requiring privacy protection, the first prediction result is a prediction result that is output by the first shared model for the second data set, and the second prediction result is a prediction result that is output by the first private model for the first data set and the second data set.

15. The method according to any one of claims 9 to 14, wherein the third loss value is obtained by performing weighting processing on the first loss value and the second loss value.

16. The method according to claim 15, wherein the third loss value is specifically obtained by performing averaging processing on the first loss value and the second loss value.

17. A client side device, wherein the client side device is applicable to a machine learning system, the machine learning system comprises at least two client side devices, and a first client side device is any one of the at least two client side devices, and comprises a transceiver module and a training module, wherein

the transceiver module is configured to receive a first shared model sent by a server; and
the training module is configured to:

output a first prediction result for a data set through the first shared model;
obtain a first loss value based on the first prediction result;
output a second prediction result for the data set through a first private model of the first client side device;
obtain a second loss value based on the second prediction result; and
perform combination processing on the first loss value and the second loss value to obtain a third loss value, wherein the third loss value is used to update the first private model.

18. The client side device according to claim 17, wherein the first shared model and the first private model share a feature extraction model.

19. The client side device according to claim 18, wherein before receiving the first shared model, the first terminal device stores a second private model, and the training module is further configured to:
update a feature extraction model of the second private model based on the feature extraction model of the first shared model, to obtain the first private model.

20. The client side device according to any one of claims 17 to 19, wherein the third loss value is further used to update the first shared model to obtain a second shared model, and the transceiver module is further configured to:
send the second shared model to the server, wherein the second shared model is used by the server to update the first shared model.

21. The client side device according to any one of claims 17 to 20, wherein the first loss value comprises at least one of a cross-entropy loss value and a mutual distillation loss value, and the second loss value comprises at least one of a cross-entropy loss value and a mutual distillation loss value.

22. The client side device according to any one of claims 17 to 21, wherein the data set comprises a first data set requiring privacy protection and a second data set not requiring privacy protection;

the training module is specifically configured to output the first prediction result for the second data set through the first shared model; and
the training module is specifically configured to output the second prediction result for the first data set and the second data set through the first private model of the first client side device.

23. The client side device according to any one of claims 17 to 22, wherein the training module is specifically configured to:
perform weighting processing on the first loss value and the second loss value to obtain the third loss value.

24. The client side device according to claim 23, wherein the training module is specifically configured to:
perform averaging processing on the first loss value and the second loss value to obtain the third loss value.

25. A client side device, wherein the client side device is applicable to a machine learning system, the machine learning system comprises at least two client side devices, and a first client side device is any one of the at least two client side devices, and comprises:

an obtaining module, configured to obtain to-be-processed data; and

an inference module, configured to process the to-be-processed data based on a target model stored in the client side device, to obtain a prediction result, wherein the target model is obtained by updating a first private model based on a third loss value, the third loss value is obtained by performing combination processing on a first loss value and a second loss value, the first loss value is obtained based on a first prediction result, the first prediction result is a prediction result that is output by a first shared model for a data set, the first shared model is obtained from the server, the second loss value is obtained based on a second prediction result, and the second prediction result is a prediction result that is output by the first private model for the data set.

26. A machine learning system, wherein the machine learning system comprises a server and at least two client side devices, and the first client side device is any one of the at least two client side devices;

the server is configured to send a first shared model to the first client side device; and
the first client side device is configured to:

output a first prediction result for a data set through the first shared model;
obtain a first loss value based on the first prediction result;
output a second prediction result for the data set through a first private model of the first client side device;
obtain a second loss value based on the second prediction result; and

perform combination processing on the first loss value and the second loss value to obtain a third loss value, wherein the third loss value is used to update the first private model.

27. A client side device, comprising:

a memory, configured to store computer-readable instructions; and
further comprising a processor coupled to the memory, configured to execute the computer-readable instructions in the memory to perform the method according to any one of claims 1 to 8.

28. A client side device, comprising:

a memory, configured to store computer-readable instructions; and
further comprising a processor coupled to the memory, configured to execute the computer-readable instructions in the memory to perform the method according to any one of claims 9 to 16.

29. A computer-readable storage medium, wherein the computer-readable storage medium stores instructions, and when the instructions are run on a computer apparatus, the computer apparatus is enabled to perform the method according to any one of claims 1 to 8.

30. A computer-readable storage medium, wherein the computer-readable storage medium stores instructions, and when the instructions are run on a computer apparatus, the computer apparatus is enabled to perform the method according to any one of claims 9 to 16.

31. A computer program product, wherein when the computer program product runs on a computer, the computer is enabled to perform the method according to any one of claims 1 to 8.

32. A computer program product, wherein when the computer program product runs on a computer, the computer is enabled to perform the method according to any one of claims 9 to 16.

33. A chip, wherein the chip is coupled to a memory, and is configured to execute a program stored in the memory, to perform the method according to any one of claims 1 to 8.

34. A chip, wherein the chip is coupled to a memory, and is configured to execute a program stored in the memory, to perform the method according to any one of claims 9 to 16.

Intelligent information chain

Smart product and industry application

| Translation/ Text analysis/... | Voice/Vision/ Image/... |

| Data | Data processing: | Data training/ Machine learning/ Deep learning | Searching/ Inference/ Decision-making | ... |

Infrastructure | Sensor | Smart chip | Basic platform | ...

IT value chain

FIG. 1

FIG. 2

Neural
network layer
130

Convolutional
layer/Pooling
layer 120

Input
layer 110

Output layer
140

Hidden layer n
13n

Hidden layer 2
132

Hidden layer 1
131

126
125
124
123
122
121

Input layer 110

Convolutional
neural network
(CNN) 100

To-be-processed
image/video

FIG. 3

| Output layer 140 |
| Hidden layer n 13n |
| Hidden layer 2 132 |
| Hidden layer 1 131 |

Neural network layer 130

Convolutional neural network (CNN) 100

| 126 | 126 | 126 |
| 125 | 125 | 125 |
| 124 | 124 | 124 |
| 123 | 123 | 123 |
| 122 | 122 | 122 |
| 121 | 121 | 121 |

Convolutional layer/Pooling layer 120

Input layer 110

Input layer 110

To-be-processed image/ video

FIG. 4

Server

Shared model
(aggregation
processing)

Deliver a
shared model

Deliver a
shared model

Upload a
shared model
trained to a
specific extent

Upload a
shared model
trained to a
specific extent

Shared model
(training)

Shared model
(training)

Client 1

Client K

A plurality of clients

FIG. 5

| Server | | Client side device |
|---|---|---|

601: Initial model →

602: Train the received initial model based on local training data

← 603: Initial model trained to a specific extent

604: Perform aggregation processing on the received initial models trained to a specific extent, to obtain a shared model 1

605: Shared model 1 →

606: Update, through the shared model 1, the locally stored initial model trained to a specific extent, and train the shared model 1, to obtain a shared model 1 trained to a specific extent

← 607: Shared model 1 trained to a specific extent

608: Perform aggregation processing on the shared models 1 that are sent by each client and that are trained to a specific extent, to obtain a shared model 2

Cycle

609: Shared model 2 →

FIG. 6

FIG. 7

| Server | First client side device |
|---|---|

900: Initial shared model →

← 901: First shared model

**902: Perform aggregation processing based on first shared models sent by at least two client side devices, to obtain a second shared model**

903: Second shared model →

**904: Output a first prediction result for a training data set through the second shared model**

**905: Obtain a first loss value based on the first prediction result**

**906: Output a second prediction result for the training data set through a first private model**

**907: Obtain a second loss value based on the second prediction result**

**908: Perform second combination processing on the first loss value and the second loss value to obtain a third loss value, where the third loss value is used to update the private model**

← 909: Third shared model

**910: Update the second shared model based on the third shared model**

FIG. 8

Server

Task model of a shared model
(aggregation processing)

Feature extraction model
(aggregation processing)

Deliver a shared
model

Upload a shared
model trained to
a specific extent

Upload a shared
model trained to
a specific extent

Deliver a
shared model

Knowledge

Task model of
a shared model

Task model of
a private model

Feature extraction
model

Client 1

Knowledge

Task model of
a shared model

Task model of
a private model

Feature extraction
model

Client K

A plurality of clients

FIG. 8-a

Server

First client side device

1001: Obtain a training data set

1002: The first client side device trains an initial shared model based on data not requiring privacy protection in a sample data set, and trains an initial private model based on data requiring privacy protection and the data not requiring privacy protection in the sample data set

1003: First shared model

1004: Perform aggregation processing based on first shared models sent by at least two client side devices, to obtain a second shared model

1005: Second shared model

1006: Output a first prediction result for a second group of training data set through the second shared model

1007: Obtain a first loss value based on the first prediction result

1008: Output a second prediction result for a first group of training data set and the second group of training data set through a first private model

1009: Obtain a second loss value based on the second prediction result

1010: Perform second combination processing on the first loss value and the second loss value to obtain a third loss value, where the third loss value is used to update the private model

1011: Third shared model

1012: Update the second shared model based on the third shared model

FIG. 9

| Obtain to-be-processed data | 1101 |
|---|---|

| Process the to-be-processed data based on a target model stored in a client side device, to obtain a prediction result | 1102 |

FIG. 10

1202

Processor

1203

Communication
line 1204

Memory

1201

Communication
interface

FIG. 11

Server

Transmission device → Operation device → Updated shared model → Transmission device

Enterprise 1

Transmission device ← Shared model ← Operation device

Private model

Data (including a label)

... Data distribution difference

Data cannot be transmitted to the outside

Enterprise K

Operation device → Shared model → Transmission device

Private model

Data (including a label)

FIG. 12

1401

Transceiver module

1402

Training module

FIG. 13

1501

Transceiver module

1502

Inference module

FIG. 14

FIG. 15

## INTERNATIONAL SEARCH REPORT

| International application No. |
| --- |
| **PCT/CN2021/133944** |

**A. CLASSIFICATION OF SUBJECT MATTER**

G06N 20/00(2019.01)i; G06N 3/04(2006.01)i; G06N 3/08(2006.01)i; G06N 5/04(2006.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNABS; CNTXT; OETXT; ENTXT; WPABS; DWPI; VEN; CNKI; IEEE: 联邦学习, 共享, 公共, 共有, 公有, 全局, 私有, 本地, 私密, 秘密, 隐私, 损失, 合并, 融合, federated learn, share, public, global, private, local, secret, privacy, loss, merge, combine

**C. DOCUMENTS CONSIDERED TO BE RELEVANT**

| Category* | Citation of document, with indication, where appropriate, of the relevant passages | Relevant to claim No. |
| --- | --- | --- |
| PX | CN 112651511 A (HUAWEI TECHNOLOGIES CO., LTD.) 13 April 2021 (2021-04-13) claims 1-34 | 1-34 |
| A | CN 111582504 A (SHENZHEN QIANHAI WEBANK CO., LTD.) 25 August 2020 (2020-08-25) entire document | 1-34 |
| A | CN 111460511 A (ZHIFUBAO (HANGZHOU) INFORMATION TECHNOLOGY CO., LTD.) 28 July 2020 (2020-07-28) entire document | 1-34 |
| A | CN 111241567 A (SHENZHEN QIANHAI WEBANK CO., LTD.) 05 June 2020 (2020-06-05) entire document | 1-34 |
| A | US 2020285980 A1 (NEC LABORATORIES EUROPE GMBH) 10 September 2020 (2020-09-10) entire document | 1-34 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **25 January 2022** | **30 January 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

| International application No. |
|---|
| **PCT/CN2021/133944** |

| Patent document<br>cited in search report | | | Publication date<br>(day/month/year) | Patent family member(s) | Publication date<br>(day/month/year) |
|---|---|---|---|---|---|
| CN | 112651511 | A | 13 April 2021 | None | |
| CN | 111582504 | A | 25 August 2020 | None | |
| CN | 111460511 | A | 28 July 2020 | None | |
| CN | 111241567 | A | 05 June 2020 | None | |
| US | 2020285980 | A1 | 10 September 2020 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011401668